# EUROPEAN PATENT APPLICATION

(11) **EP 4 804 617 A1**
(43) Date of publication of application: **09.09.2026**
(21) Application number: 24887985.0
(22) Date of filing: 06.11.2024
(51) Int. Cl.: H04W 36/00

(54) **COMMUNICATION METHOD AND COMMUNICATION APPARATUS**

(30) Priority: 10.11.2023 CN 202311512989
(71) Applicant: Huawei Technologies Co., Ltd., Shenzhen, Guangdong 518129 (CN)
(72) Inventor: WANG, Yu, Shenzhen, Guangdong 518129 (CN)
(74) Representative: Gill Jennings & Every LLP
(86) International application number: PCT/CN2024/130163
(87) International publication number: WO 2025/098374

(57) **Abstract**

Embodiments of this application relate to the field of communication technologies and disclose a communication method and a communication apparatus, to reduce signaling overheads of a terminal device during handover. The method includes: The terminal device obtains, based on a location of the terminal device, a common part that is of RRC signaling and that is applicable to a first zone, and obtains a dedicated part of the RRC signaling of the terminal device.

## Description

This application claims priority to Chinese Patent Application No. 202311512989.X, filed with the China National Intellectual Property Administration on November 10, 2023 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

With development of communication technologies, non-terrestrial communication networks (non-terrestrial networks, NTNs) include nodes such as a satellite, a high altitude platform, and an uncrewed aerial vehicle. The NTN has advantages such as global coverage, long-distance transmission, and being not limited by geographical conditions, and is widely applied to a plurality of fields such as maritime communication and positioning and navigation, to meet various service requirements of users.

However, when a user uses, through a terminal device, a service provided by the NTN, the terminal device may be frequently handed over due to mobility of a satellite. Consequently, the terminal device needs to continuously update signaling, and signaling overheads are high.

### SUMMARY

Embodiments of this application provide a communication method and a communication apparatus, to reduce signaling overheads of a terminal device during handover.

According to a first aspect, a communication method is provided. The method includes: A terminal device obtains, based on a location of the terminal device and the like, a common part that is of radio resource control (radio resource control, RRC) signaling and that is applicable to a first zone, and obtains a dedicated part of the RRC signaling of the terminal device, where the location of the terminal device is located in the first zone.

In this application, the RRC signaling that needs to be obtained by the terminal device includes the common part and the dedicated part, and the common part is applicable to a zone in which the terminal device is located. In this way, the terminal device may obtain the common part based on the location of the terminal device. Therefore, when the terminal device moves in the first zone, because the common part of the RRC signaling remains unchanged, the terminal device does not need to update the common part either, to reduce signaling overheads.

In an example, the common part of the RRC signaling is a part shared by a terminal device in the first zone, and the dedicated part is dedicated to the terminal device.

In another example, the common part of the RRC signaling may include at least one of the following: a common synchronization signal block-based measurement timing configuration (synchronization signal block-based measurement timing configuration, SMTC), a common bandwidth part (bandwidth part, BWP), and a common random access channel (random access channel, RACH).

In another example, the dedicated part of the RRC signaling may include at least one of the following: a dedicated SMTC, a dedicated BWP, and a dedicated RACH.

In a possible implementation, the terminal device may be in a multi-connection state, the terminal device in the multi-connection state is separately connected to a control node and a satellite node, and the control node is communicatively connected to the satellite node. The terminal device may obtain, based on the location of the terminal device, the common part of the RRC signaling from the control node whose service zone includes the first zone.

The control node may be a terrestrial node, for example, may be a device (for example, an access network device or a core network device) deployed on the ground. The control node may alternatively be an air node, for example, may be an aircraft or a satellite node. When the control node is the air node, the control node may be attached to the satellite node.

Based on this implementation, when the terminal device in the multi-connection state performs handover, mobility interruption does not occur. Therefore, a delay caused by the mobility interruption can be avoided, and user experience is improved. In addition, the terminal device may directly obtain, based on the location of the terminal device, the common part from the control node whose service zone includes the first zone. This is convenient and stable.

In a possible implementation, the terminal device may obtain, based on time information, the dedicated part from the satellite node whose beam service zone includes the first zone.

Based on this implementation, due to mobility of the satellite node, satellite nodes that serve the first zone may be different within different time periods. Therefore, the terminal device may obtain, based on the time information, the dedicated part from the satellite node whose service zone includes the first zone, for subsequent handover/reselection.

In a scenario, the satellite node may include a primary satellite node and a secondary satellite node, the dedicated part may include a first dedicated part and a second dedicated part, and the first dedicated part is related to the primary satellite node. For example, the first dedicated part may include one or more of a primary satellite node-dedicated SMTC, a primary satellite node-dedicated BWP, and a primary satellite node-dedicated RACH. The second dedicated part is related to the secondary satellite node. For example, the second dedicated part may include one or more of a secondary satellite node-dedicated SMTC, a secondary satellite node-dedicated BWP, and a secondary satellite node-dedicated RACH.

In a possible implementation, the terminal device may obtain the dedicated part based on an obtained interface type for message transmission between the control node and the satellite node.

In an example, when a message is transmitted between the primary satellite node and the secondary satellite node through Xn-C (or an interface type for message transmission between the primary satellite node and the secondary satellite node is Xn-C), the terminal device may obtain the first dedicated part and the second dedicated part from the primary satellite node.

In another example, when a message is transmitted between the control node and the satellite node through Hs-C (or an interface type for message transmission between the control node and the satellite node is Hs-C), the terminal device may obtain the first dedicated part from the primary satellite node, and obtain the second dedicated part from the primary satellite node or the control node.

It should be noted that the Hs-C may be a newly defined interface or a reused existing interface (for example, an F1-like interface).

Based on this implementation, the terminal device may flexibly select, based on the interface type for message transmission between the control node and the satellite node, a node from which the dedicated part is obtained. For example, when a message is transmitted between the primary satellite node and the secondary satellite node through Xn-C, due to instability of the Xn-C, the terminal device may directly obtain the second dedicated part from the primary satellite node.

In another possible implementation, the terminal device may obtain the dedicated part of the RRC signaling based on a signaling configuration status between the terminal device and the secondary satellite node.

In an example, when transmission signaling is configured between the terminal device and the secondary satellite node, the terminal device may obtain the second dedicated part from the secondary satellite node.

In another example, when no transmission signaling is configured between the terminal device and the secondary satellite node, the terminal device may obtain the second dedicated part from the primary satellite node or the control node.

It should be noted that the second dedicated part in the primary satellite node and the control node is obtained from the secondary satellite node. In other words, the primary satellite node and the secondary satellite node have only a function of forwarding the second dedicated part.

In a possible implementation, a timer is configured for the terminal device, and when the timer expires, the terminal device may send a retransmission request used to request to retransmit unreceived data. Correspondingly, after receiving the retransmission request, a network side device (for example, the control node or the satellite node) that sends the data to the terminal device may send, to the terminal device, the data that is not received by the terminal device.

In some scenarios, for example, in a split bearer (Split Bearer) scenario, the timer may be configured by the satellite node.

For example, when a configuration manner is an MCG split bearer, a PCell may perform configuration for the terminal device. For another example, when the configuration manner is an SCG split bearer, a PScell may perform configuration for the terminal device.

In some other scenarios, for example, in a dual active protocol stack (dual active protocol stack, DAPS) handover scenario, when the data is data that is from a source satellite node and that is received by a destination satellite node, the timer is configured by the source satellite node or the destination satellite node. The source satellite node is a satellite node currently accessed by the terminal device, and the destination satellite node is a satellite node to which the terminal device needs to be handed over. In this way, a data transmission delay between the network side device and the terminal device can be reduced.

In another possible implementation, when the timer expires, the terminal device may further send indication information indicating whether the data is received. Correspondingly, the network side device (for example, the control node or the satellite node) may determine, based on the indication information, whether the data needs to be retransmitted to the terminal device. Alternatively, when the network side device determines, based on the indication information, that the terminal device has received the data, the network side device may delete stored data. In this way, the data stored in the network side device can be cleared, to increase an available memory of the network side device.

In a possible implementation, the terminal device may further report location-related information of primary satellite nodes and secondary satellite nodes that are accessed by the terminal device within different time periods, to assist the network side device in performing mobility management on the terminal device in the first zone.

In a possible implementation, status information of satellite nodes may be preconfigured for the terminal device. The status information of the satellite nodes may include activation statuses of primary satellite nodes and secondary satellite nodes of the satellite node and status conversion relationships for the primary satellite nodes and the secondary satellite nodes of the satellite nodes within different time periods. In other words, the network side device may configure, for the terminal device at a time, activation statuses of satellite nodes that are accessed by the terminal device and status conversion relationships for the satellite nodes that are accessed by the terminal device within different time periods, to reduce signaling overheads.

According to a second aspect, a communication method is provided. The method includes: A control node obtains a location of a terminal device, and configures a common part of RRC signaling for the terminal device based on the location of the terminal device. The common part is applicable to a first zone, and the location of the terminal device is located in the first zone.

In this application, after obtaining the location of the terminal device, the control node may configure the common part for the terminal device based on the location of the terminal device. Because a moving range of the terminal device is limited, and the common part of the RRC signaling is applicable to the first zone, when the terminal device moves in the first zone, the terminal device does not need to update the common part, to reduce signaling needed for updating the common part.

In an example, the RRC signaling may further include a dedicated part, and the dedicated part is dedicated to the terminal device.

In another example, the common part of the RRC signaling includes at least one of a common SMTC configuration, a common BWP, and a common RACH.

In another example, the dedicated part of the RRC signaling includes at least one of a dedicated SMTC configuration, a dedicated BWP, and a dedicated RACH.

In a possible implementation, the terminal device may be in a multi-connection state, the terminal device in the multi-connection state is separately connected to a control node and a satellite node, and the control node is communicatively connected to the satellite node. The control node whose service zone includes the first zone may configure the common part of RRC signaling for the terminal device.

The control node may be a terrestrial node, for example, may be a device (for example, an access network device or a core network device) deployed on the ground. The control node may alternatively be an air node, for example, may be an aircraft or a satellite node. When the control node is the air node, the control node may be attached to the satellite node.

Based on this implementation, when the terminal device in the multi-connection state performs handover/reselection, mobility interruption does not occur. Therefore, a delay caused by the mobility interruption can be avoided, and user experience is improved. In addition, the control node whose service zone includes the first zone may configure the common part for the terminal device. This is convenient and stable.

In a possible implementation, after receiving, from the terminal device, indication information indicating whether data is received, the control node may determine, based on the indication information, whether to retransmit the data to the terminal device. The indication information is sent when a timer configured for the terminal device expires.

The timer may be configured by the control node for the terminal device, or may be configured by the satellite node for the terminal device.

In a possible implementation, the control node receives location-related information that is reported by the terminal device and that is of primary satellite nodes and secondary satellite nodes that are accessed by the terminal device within different time periods. The control node may perform mobility management on the terminal device in the first zone based on the location-related information of the primary satellite nodes and the secondary satellite nodes that are accessed by the terminal device within different time periods.

According to a third aspect, a communication method is provided. The method includes: A satellite node obtains requirement information of a terminal device, and configures a dedicated part of RRC signaling of the terminal device for the terminal device based on the requirement information of the terminal device.

In an example, the RRC signaling further includes a common part. The common part is applicable to a first zone, and a location of the terminal device is located in the first zone.

In an example, the common part of the RRC signaling is shared by a terminal device in the first zone. The dedicated part of the RRC signaling is dedicated to the terminal device.

In another example, the common part of the RRC signaling includes at least one of a common SMTC configuration, a common BWP, and a common RACH.

In another example, the dedicated part of the RRC signaling includes at least one of a dedicated SMTC configuration, a dedicated BWP, and a dedicated RACH.

In a possible implementation, the terminal device may be in a multi-connection state, the terminal device in the multi-connection state is separately connected to a control node and a satellite node, and the control node is communicatively connected to the satellite node.

With reference to this implementation, the satellite node whose beam service zone includes the first zone configures the dedicated part for the terminal device.

In a possible implementation, the satellite node includes a primary satellite node and a secondary satellite node. The dedicated part of the RRC signaling includes a first dedicated part and a second dedicated part. The first dedicated part is related to the primary satellite node, and the second dedicated part is related to the secondary satellite node.

In an example, when a message is transmitted between the primary satellite node and the secondary satellite node through Xn-C, the primary satellite node configures the first dedicated part and the second dedicated part for the terminal device.

In another example, when a message is transmitted between the control node and the satellite node through Hx-C, the primary satellite node configures the first dedicated part for the terminal device. The primary satellite node or the control node configures the second dedicated part for the terminal device.

In another example, when transmission signaling is configured between the secondary satellite node and the terminal device, the secondary satellite node may configure the second dedicated part for the terminal device.

In another example, when no transmission signaling is configured between the secondary satellite node and the terminal device, a primary device node may configure the second dedicated part for the terminal device.

In a possible implementation, after receiving, from the terminal device, indication information indicating whether data is received, the satellite node may determine, based on the indication information, whether to retransmit the data to the terminal device. The indication information is sent when a timer configured for the terminal device expires.

The timer may be configured by the control node for the terminal device, or may be configured by the satellite node for the terminal device.

In a possible implementation, the satellite node receives location-related information that is reported by the terminal device and that is of primary satellite nodes and secondary satellite nodes that are accessed by the terminal device within different time periods. The satellite node may perform mobility management on the terminal device based on the location-related information of the primary satellite nodes and the secondary satellite nodes that are accessed by the terminal device within different time periods.

According to a fourth aspect, a communication apparatus is provided, to implement the foregoing methods. The communication apparatus may be the terminal device in any one of the first aspect or the implementations of the first aspect, an apparatus having a function of the terminal device, or an apparatus, for example, a chip, included in the terminal device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface. The processing module may be configured to implement a processing function in any one of the foregoing aspects and the possible implementations of the foregoing aspects.

In some possible designs, the transceiver module includes a sending module and a receiving module, respectively configured to implement the sending function and the receiving function in any one of the foregoing aspects and the possible implementations of the foregoing aspects.

According to a fifth aspect, a communication apparatus is provided, to implement the foregoing methods. The communication apparatus may be the control node in any one of the second aspect or the implementations of the second aspect, an apparatus having a function of the control node, or an apparatus, for example, a chip, included in the control node. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface. The processing module may be configured to implement a processing function in any one of the foregoing aspects and the possible implementations of the foregoing aspects.

In some possible designs, the transceiver module includes a sending module and a receiving module, respectively configured to implement the sending function and the receiving function in any one of the foregoing aspects and the possible implementations of the foregoing aspects.

According to a sixth aspect, a communication apparatus is provided, to implement the foregoing methods. The communication apparatus may be the satellite node in any one of the third aspect or the implementations of the third aspect, an apparatus having a function of the satellite node, or an apparatus, for example, a chip, included in the satellite node. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface. The processing module may be configured to implement a processing function in any one of the foregoing aspects and the possible implementations of the foregoing aspects.

In some possible designs, the transceiver module includes a sending module and a receiving module, respectively configured to implement the sending function and the receiving function in any one of the foregoing aspects and the possible implementations of the foregoing aspects.

According to a seventh aspect, a communication apparatus is provided, including at least one processor. The processor is configured to execute, by using a logic circuit and/or through communication, a computer program or instructions stored in a memory, to cause the communication apparatus to perform the method according to any one of the foregoing aspects.

In a possible implementation, the communication apparatus further includes the memory. Optionally, the memory is integrated with the processor, or the memory may be independent of the processor.

In a possible implementation, the memory is independent of the communication apparatus.

In a possible implementation, the communication apparatus further includes a communication interface, and the communication interface is configured to communicate with a module outside the communication apparatus.

The communication apparatus may be the terminal device in any one of the first aspect or the implementations of the first aspect, or an apparatus, for example, a chip, included in the terminal device.

According to an eighth aspect, a communication apparatus is provided, including at least one processor. The processor is configured to execute, by using a logic circuit and/or through communication, a computer program or instructions stored in a memory, to cause the communication apparatus to perform the method according to any one of the foregoing aspects.

In a possible implementation, the communication apparatus further includes the memory. Optionally, the memory is integrated with the processor, or the memory may be independent of the processor.

In a possible implementation, the memory is independent of the communication apparatus.

In a possible implementation, the communication apparatus further includes a communication interface, and the communication interface is configured to communicate with a module outside the communication apparatus.

The communication apparatus may be the network device in any one of the second aspect or the implementations of the second aspect, or an apparatus, for example, a chip, included in the network device.

According to a ninth aspect, a communication apparatus is provided, including at least one processor. The processor is configured to execute, by using a logic circuit and/or through communication, a computer program or instructions stored in a memory, to cause the communication apparatus to perform the method according to any one of the foregoing aspects.

In a possible implementation, the communication apparatus further includes the memory. Optionally, the memory is integrated with the processor, or the memory may be independent of the processor.

In a possible implementation, the memory is independent of the communication apparatus.

In a possible implementation, the communication apparatus further includes a communication interface, and the communication interface is configured to communicate with a module outside the communication apparatus.

The communication apparatus may be the network device in any one of the third aspect or the implementations of the third aspect, or an apparatus, for example, a chip, included in the network device.

According to a tenth aspect, a computer-readable storage medium is provided. The computer-readable storage medium stores a computer program or instructions. When the computer program or the instructions are run on a communication apparatus, the communication apparatus is caused to perform the method according to any one of the foregoing aspects or the implementations of the foregoing aspects.

According to an eleventh aspect, a computer program product including instructions is provided. When the computer program product runs on a communication apparatus, the communication apparatus is caused to perform the method according to any one of the foregoing aspects or the implementations of the foregoing aspects.

According to a twelfth aspect, a communication apparatus is provided (for example, the communication apparatus may be a chip or a chip system). The communication apparatus includes a processor, configured to implement the functions in any one of the foregoing aspects or the implementations of the foregoing aspects.

In some possible designs, the communication apparatus includes a memory, and the memory is configured to store necessary program instructions and data.

In some possible designs, when the apparatus is a chip system, the apparatus may include a chip, or may include the chip and another discrete component.

It may be understood that when the communication apparatus according to any one of the fourth aspect to the twelfth aspect is a chip, the foregoing sending action/function may be understood as output, and the foregoing receiving action/function may be understood as input.

For a technical effect brought by any design manner in the fourth aspect to the twelfth aspect, refer to the technical effects brought by different design manners in the first aspect, the second aspect, or the third aspect. Details are not described herein again.

According to a thirteenth aspect, a communication system is provided. The communication system includes a terminal device, a control node, and a satellite node. The terminal device may perform the method according to any one of the first aspect or the implementations of the first aspect, the control node may perform the method according to any one of the second aspect or the implementations of the second aspect, and the satellite node may perform the method according to any one of the third aspect or the implementations of the third aspect.

### BRIEF DESCRIPTION OF DRAWINGS

FIG. 1 is a diagram of an architecture of a satellite communication system according to an embodiment of this application;
FIG. 2 is a diagram of an architecture of another satellite communication system according to an embodiment of this application;
FIG. 3 is a diagram of a correspondence between a beam of a satellite and a beam position according to an embodiment of this application;
FIG. 4 is a diagram of group handover of a user equipment according to an embodiment of this application;
FIG. 5 is a schematic flowchart of a cell handover method according to an embodiment of this application;
FIG. 6(a) and FIG. 6(b) are diagrams of an architecture of still another communication system according to an embodiment of this application;
FIG. 7 is a diagram of an architecture of still another communication system according to an embodiment of this application;
FIG. 8 is a diagram of an architecture of still another communication system according to an embodiment of this application;
FIG. 9 is a diagram of a structure of a communication apparatus according to an embodiment of this application;
FIG. 10 is a schematic flowchart of a communication method according to an embodiment of this application;
FIG. 11 is a diagram of an architecture of still another communication system according to an embodiment of this application;
FIG. 12(a) and FIG. 12(b) are diagrams of an architecture of still another communication system according to an embodiment of this application;
FIG. 13 is a diagram of a relative location relationship between a primary satellite node and a secondary satellite node according to an embodiment of this application;
FIG. 14 is a diagram of status conversion relationships for a primary satellite node and a secondary satellite node according to an embodiment of this application;
FIG. 15 is a diagram of a structure of a terminal device according to an embodiment of this application;
FIG. 16 is a diagram of a structure of a control node according to an embodiment of this application;
FIG. 17 is a diagram of a structure of a satellite node according to an embodiment of this application; and
FIG. 18A to FIG. 18C each are a diagram of a handover scenario.

### DESCRIPTION OF EMBODIMENTS

For ease of understanding technical solutions provided in embodiments of this application, technologies related to this application are first described briefly. The brief descriptions are as follows.

Non-terrestrial communication network NTN (non-terrestrial network, NTN): The NTN may include air nodes such as a satellite network, a high altitude platform, and an uncrewed aerial vehicle. The NTN has prominent advantages of global coverage, long-distance transmission, flexible networking, convenient deployment, no geographical limitation, and the like. Based on these advantages, the NTN can be widely applied to a plurality of fields such as maritime communication, positioning and navigation, disaster relief, scientific delay, video broadcasting, and earth observation.

A satellite network in the NTN and a terrestrial wireless network like a 5th generation (5th generation, 5G) network are combined, to jointly form a sea-land-air-space integrated communication network with seamless global coverage, to meet a plurality of ubiquitous service requirements of users.

As an important part of the NTN, the satellite network is generally in an ultra-dense and heterogeneous trend. First, a scale of the satellite network has increased from 66 satellites of the Iridium satellite constellation to 720 satellites of the OneWeb satellite constellation, and finally to more than 12,000 satellites of the ultra-dense starlink (starlink) satellite constellation in a low earth orbit (low earth orbit, LEO). In addition, the satellite network is heterogeneous, and has evolved from a conventional single-layer communication network to a multi-layer communication network. The satellite network inclines to achieve complex and diversified functions, and is gradually compatible with and supports functions such as navigation enhancement, earth observation, and multi-dimensional information on-orbit processing.

A satellite communication system is used as an example. Based on a working module of a payload (for example, a beam) of a satellite, the satellite communication system may be classified into an earth-fixed (earth-fixed or quasi-earth fixed) satellite communication system and an earth-moving (earth-moving) satellite communication system. The following describes the earth-fixed satellite communication system and the earth-moving satellite communication system.

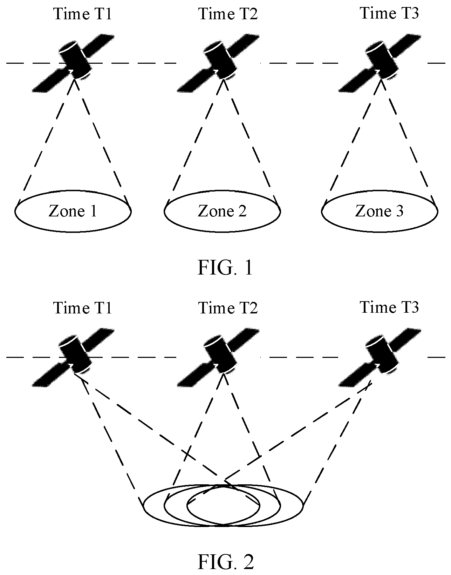

Earth-moving satellite communication system: In the earth-moving satellite communication system, coverage of a beam of a satellite may change as the satellite moves. For example, as shown in FIG. 1, within a period of time (for example, time T1 to time T3), coverage of a beam of a satellite may move as the satellite moves. In other words, within different time periods (for example, from the time T1 to the time T2, and from the time T2 to the time T3), coverage or service zones of the beam of the satellite are different, for example, a coverage zone 1 of the beam of the satellite at the time T1, a coverage zone 2 of the beam of the satellite at the time T2, and a coverage zone 3 of the beam of the satellite at the time 3.

Earth-fixed satellite communication system: In the earth-fixed satellite communication system, a beam of a satellite may approximately cover a same zone at different time. For example, as shown in FIG. 2, within a period of time (for example, time T1 to time T3), a satellite may dynamically adjust a direction of a beam, so that the beam approximately covers a same zone on the ground. In other words, within different time periods (for example, from the time T1 to the time T2, and from the time T2 to the time T3), coverage or service zones of the beam of the satellite may be the same (or approximately the same, or having an overlapping zone).

In embodiments of this application, a service zone of a satellite network may be divided into a plurality of small geographical zones based on geographical locations, and each geographical zone may be referred to as a beam position (beamspot). Contours, sizes, radii, and areas of different beam positions may be the same or may be different. Different beam positions have different geographical locations. Different beam positions may overlap or may not overlap. In a possible implementation, a shape of a beam position may be a regular hexagon, or another shape like a regular pentagon, a circle, or an ellipse. Alternatively, a shape of a beam position may be an irregular shape. This is not limited.

To simplify procedures such as beam association and scheduling of a satellite network, a beam position set corresponding to a service zone generally needs to be predefined, to complete mapping between a beam and a beam position. To be specific, a beam of a satellite may serve a same beam position or different beam positions at different time.

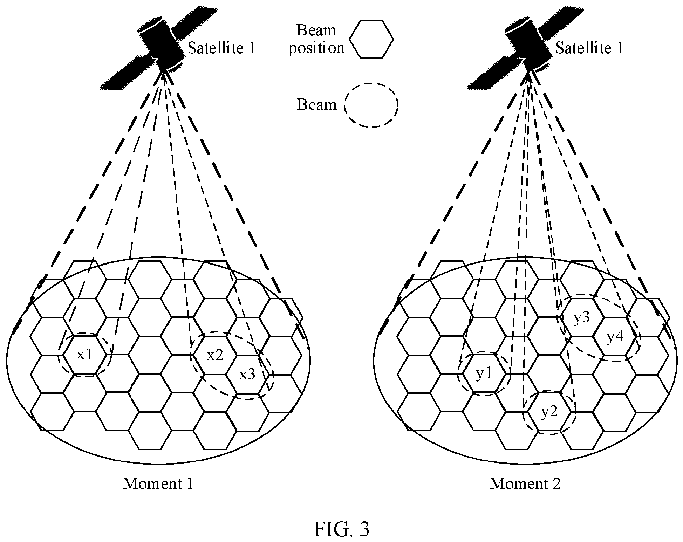

FIG. 3 shows a correspondence between a plurality of beams of a satellite and beam positions. The satellite may serve different beam position subsets through limited beams in a time division mode. In FIG. 3, at a moment 1, a satellite 1 may serve a beam position x1, a beam x2, and a beam x3 through two beams; and at a moment 2, the satellite 1 may serve a beam position y1, a beam position y2, a beam position y3, and a beam position y4 through three beams.

In embodiments of this application, at different tilt angles (or antenna opening angles), coverage of a beam may vary. Therefore, a mapping between a beam and a beam position may be a one-to-one mapping or may be a one-to-many mapping.

In an application scenario, in a beam hopping satellite communication system (also referred to as a beam hopping satellite LEO satellite network), movement of a satellite node causes a problem of group handover (for terminals in a connected state) or group reselection (for terminals in an idle state) to terminals in a beam position.

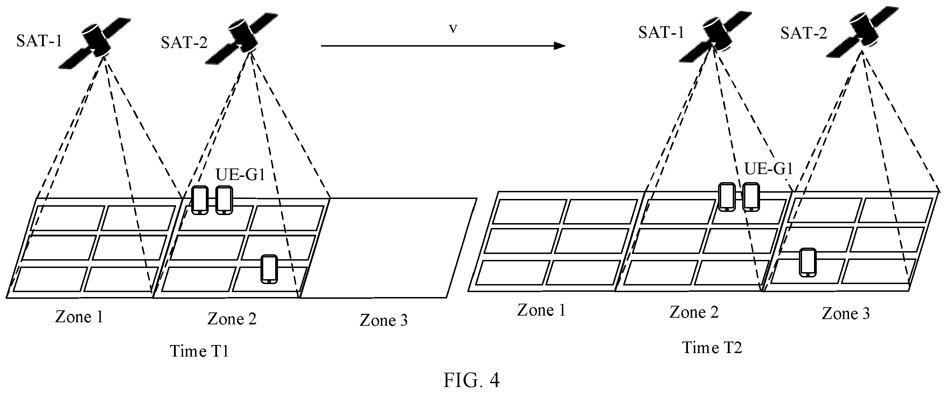

The group handover is used as an example. As shown in FIG. 4, a user equipment cluster (namely, user equipment (user equipment group, UE-G) UE-G1, where the UE-G1 includes a plurality of UEs) in a single beam position in a zone (zone) 2 is used. At time T1, a service may be provided for the UE-G1 by one or more beams of a satellite SAT-2. At time T2, due to movement of the satellite SAT-2, the satellite SAT-2 cannot continue to serve the zone 2. In this case, one or more beams of a satellite SAT-1 may continue to provide a service for the UE-G1. In other words, group handover occurs on the UE cluster (the UE-G1). In addition, because a satellite node moves at a high speed (about 7.5 km/s), the group handover occurs on the UE cluster at a frequency of about once/seconds to dozens of seconds. In other words, in the beam hopping satellite communication system, group handover mainly triggered by network mobility becomes a normal phenomenon.

To ensure service continuity of a user equipment in a handover process, a network side in a communication system (for example, the foregoing NTN system or a (new radio, NR) system) may perform mobility management on the user equipment. Mobility management may include cell handover, cell reselection, registration update, tracking area update, and the like.

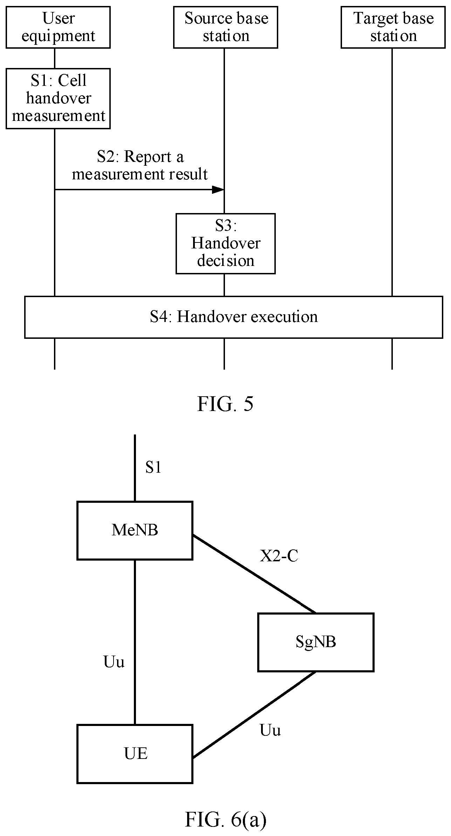

In an example, the cell handover is used as an example. As shown in FIG. 5, cell handover of a user equipment may include the following S1 to S4.

### S1: Cell handover measurement.

A network side device may deliver, to the user equipment, measurement configurations corresponding to a plurality of cells (including a serving cell and neighboring cells of the serving cell). The user equipment may measure signal quality (for example, reference signal received power (reference signal received power, RSRP) and reference signal received quality (reference signal received quality, RSRQ)) of the cells based on the received measurement configurations.

As shown in FIG. 5, the network side device may deliver the measurement configurations corresponding to the plurality of cells to the UE by using an RRC reconfiguration (RRC reconfiguration) message. Correspondingly, the user equipment may send an RRC reconfiguration complete (RRC reconfiguration complete) message to the network side device.

### S2: Report a measurement result.

After measuring the plurality of cells based on the measurement configurations, the UE may report the measurement result to the network side device (for example, a base station that currently communicates with the UE is referred to as a source base station in cell handover). A reporting manner may include periodic reporting or event-triggered reporting. In the event-triggered reporting, a usually configured reporting condition may include: Signal quality of the serving cell is lower than a threshold 1 and/or signal quality of the neighboring cell is higher than a threshold 2. The threshold 1 and the threshold 2 may be set based on a requirement. This is not limited.

### S3: Handover decision.

The network side device (for example, the base station that currently communicates with the UE) receives a measurement report from the user equipment, may select an appropriate neighboring cell based on the measurement result, and deliver, to the user equipment, some or all of information such as context information, admission control, and reserved resources related to the cell handover.

### S4: Handover execution.

The UE receives the cell handover-related control information from the serving cell, and may complete an access procedure in a new cell.

In this embodiment of this application, a random access preamble needed by the UE during the cell handover is a dedicated preamble, which is different from a contention-based random access preamble used during initial access to a cell. In addition, when the UE performs cell handover, a configuration supported by a time domain periodicity of a random access channel (random access channel, RACH) may be 10/20/40/80/160 milliseconds (ms), which is the same as a configuration of a RACH periodicity during initial access.

In another example, for the cell reselection, a network side device may send, in a broadcast manner, parameters such as a measurement configuration related to a neighboring cell. After receiving the parameters such as the measurement configuration related to the neighboring cell, a UE may compare a measurement value (for example, reference signal received power RSRP and reference signal received quality RSRQ) of the UE with a parameter (for example, a reselection threshold) delivered by the network side. If a reselection condition is met, the UE may autonomously reselect a target neighboring cell.

In addition, because a near-far effect in an NTN system is not significant, efficiency of handover and/or reselection triggered based on a signal instruction alone is low. Therefore, a location-assisted handover/reselection enhancement technology is introduced in an NR/NTN system, that is, related information such as a location of the user equipment and/or a satellite ephemeris (for example, a speed and a location) is used to assist mobility management. For example, a specific implementation form may be: Mobility management on the UE is implemented based on time (time period information, for example, [T1, T2])/a timer (for example, preset time is reached or the timer expires). Alternatively, mobility management on the UE is implemented based on location information (a distance between the UE and a reference point of a source cell is greater than a threshold 3, and a distance between the UE and a reference point of a target cell is less than a threshold 4) of the UE. Alternatively, mobility management on the UE is implemented through a combination of a timer and signal quality (for example, duration set by the timer is reached and the signal quality is lower than a preset threshold). Alternatively, mobility management on the UE is implemented through a combination of location information and signal quality (a distance between the UE and a reference point of a source cell is greater than a threshold 3, a distance between the UE and a reference point of a target cell is less than a threshold 4, and the signal quality is lower than a preset threshold). The threshold 3, the threshold 4, and the preset threshold may be set based on a requirement. This is not limited.

However, in the NTN system, the cell handover and/or reselection are/is usually designed for a user equipment in a single-connection state, and a mobility interruption delay is long. In addition, in a multi-connectivity (dual connectivity, DC) scenario including an NTN node, delay differences between the user equipment and different satellite nodes or a delay difference between the user equipment and a satellite node/a terrestrial node is large. This is not conducive to multi-connectivity data processing on different transmission paths.

In an example, when a UE is in an RRC connected state, a network side may configure a master cell group (master cell group, MCG) and a secondary cell group (secondary cell group, SCG) for the UE in the connected state (the connected state may be dual connectivity).

The MCG may include a plurality of cells, and the plurality of cells include a primary cell (primary cell, PCell). The PCell is used to initiate initial access. The SCG also includes a plurality of cells, and the plurality of cells include a primary secondary cell (primary secondary cell, PScell). The PScell initiates initial access in the SCG.

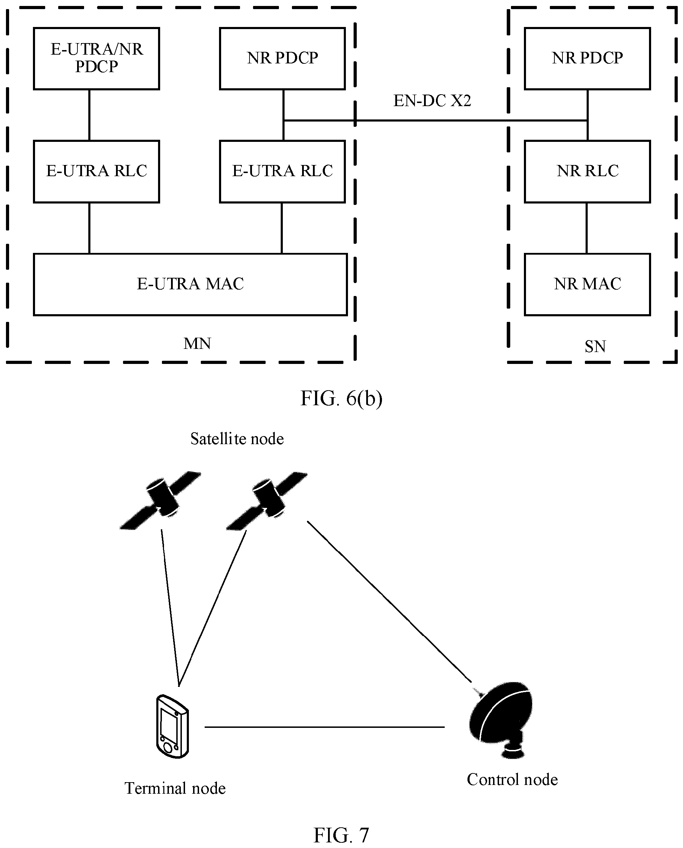

For example, in an EN-DC scenario (namely, long term evolution (long term evolution, LTE) and NR DC), a core network is an evolved packet core (evolved packet core, EPC), a control plane anchor is an eNodeB, and a user plane anchor is an eNodeB, a gNodeB, or an EPC. An architecture of a control plane may be shown in FIG. 6(a), and an architecture of a user plane may be shown in FIG. 6(b).

As shown in FIG. 6(a), a UE is simultaneously connected to two base stations, and the two base stations are respectively referred to as a master evolved NodeB (Master eNB, MeNB) and a secondary evolved NodeB (SeNB, Secondary eNB), or the two base stations may also be respectively referred to as a master base station and a secondary base station. The UE may transmit RRC signaling to the MeNB and the SeNB through air interfaces or Uu interfaces. RRC signaling may be transmitted between the MeNB and the SeNB through an X2-C interface.

As shown in FIG. 6(b), the MeNB and the SeNB each may include a packet data convergence protocol (packet data convergence protocol, PDCP) layer, a radio link control (radio link control, RLC) layer, and a medium access control (medium access control, MAC) layer. The PDCP layer of the MeNB may be classified into an evolved access network (evolved universal terrestrial radio access network, E-UTR)/NR PDCP layer and an NR PDCP layer, the RLC layer of the MeNB may be an evolved universal terrestrial radio access (evolved universal terrestrial radio access, E-UTRA) RLC layer, and the MAC layer of the MeNB is an E-UTRA MAC layer. The PDCP layer of the SeNB may be an NR PDCP layer, the RLC layer of the SeNB may be an NR RLC layer, and the MAC layer of the SeNB is an NR MAC layer.

With reference to the foregoing EN-DC, in some cases, for example, the UE simultaneously accesses a plurality of satellite nodes. The plurality of satellite nodes may also include a PScell and a PCell. The PScell may configure differential (delta)-RRC for the PCell. However, as the PCell is frequently handed over, RRC signaling of the PScell is also updated. In addition, information exchange between the PCell and the PScell depends on an Xn interface. However, stability of the Xn interface between satellite nodes is poor (for example, a distance between the satellite nodes is long), and a transmission delay is also long.

In view of this, an embodiment of this application provides a communication method, to resolve a problem that a user equipment in an NTN (for example, an LEO satellite network) needs to frequently update RRC signaling. The user equipment may obtain a common part of RRC signaling based on a location of the user equipment, where the common part is applicable to a zone including the location of the user equipment, and obtain a dedicated part based on time information. In this way, when the user equipment moves in a zone, because the common part is applicable to the zone, the terminal device does not need to update the common part. Therefore, signaling overheads during RRC signaling update can be reduced.

For ease of understanding of embodiments of this application, the following descriptions are provided before embodiments of this application are described.
1. In embodiments of this application, a "network element" and a "node" may be logical entities or physical entities. In other words, in embodiments of this application, "apparatus" and "network element" may be replaced for description. This is uniformly described herein, and details are not described below again.
2. In embodiments of this application, for ease of description, when numbering or indexing is involved, numbering may be performed consecutively starting from 1, may be performed consecutively starting from 0, or may be performed starting from any parameter.
3. "Predefinition", "preconfiguration", or "agreement in a protocol" may be implemented by pre-storing corresponding code or a corresponding table in a device (for example, a network device or a terminal device), or in another manner that may indicate related information. A specific implementation of "predefinition", "preconfiguration", or "agreement in a protocol" is not limited in embodiments of this application. "Storage" may be storage in one or more memories.
4. A "protocol" in embodiments of this application may be a standard protocol in the communication field, for example, may include an LTE protocol, an NR protocol, and a related protocol applied to a future communication system. This is not limited in embodiments of this application.
5. In embodiments of this application, descriptions such as "when...", "in a case of...", and "if" all mean that a device performs corresponding processing in an objective case, and are not intended to limit time, and the device is not required to perform a determining action during implementation. This does not mean that there is another limitation.
6. In embodiments of this application, "sending information to... (the terminal device)" may be understood as that a destination end of the information is the terminal device, and may include directly or indirectly sending the information to the terminal device; and "receiving information from... (satellite node)" or "receiving information from... (satellite node)" may be understood as that a source end of the information is the satellite node, and may include directly or indirectly receiving information from the satellite node. Information may undergo necessary processing, for example, a format change, between a source end and a destination end for sending the information. However, the destination end may understand valid information from the source end. Similar expressions in this application may be understood similarly, and details are not described herein again.
7. In descriptions of embodiments of this application, unless otherwise specified, "and/or" in embodiments of this application may indicate that three relationships exist. For example, A and/or B may represent the following three cases: Only A exists, both A and B exist, and only B exists, where A and B may be singular or plural. In addition, "at least one of the following items (pieces)" or a similar expression thereof indicates any combination of these items, including a single item (piece) or any combination of a plurality of items (pieces). In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description.
8. A terminal device in embodiments of this application includes various devices having a wireless communication function, and the terminal device may be configured to be connected to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, a smart grid, smart furniture, a smart office, smart wearable, smart transportation, a smart city drone, a robot, remote sensing, passive sensing, positioning, navigation and tracking, and autonomous delivery. The terminal device may be a terminal in any one of the foregoing scenarios, such as an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, an aircraft (for example, an uncrewed aerial vehicle, a helicopter, a multi-helicopter, a quadcopter, or an airplane), a ship, a remote control device, a smart home device, an industrial device, an apparatus built in the foregoing device (for example, a communication module, a modem, or a chip in the foregoing device), or another processing device connected to a wireless modem. For ease of description, an example in which the terminal device is the terminal or the UE is used below for description. In some scenarios, the terminal device may alternatively serve as a base station. For example, the terminal device may serve as a scheduling entity, and the terminal device provides a sidelink (sidelink) signal between UEs in a scenario like V2X, D2D, or P2P. In embodiments of this application, an apparatus configured to implement a function of the terminal device may be a terminal device, or may be an apparatus that can support the terminal device in implementing the function, for example, a chip system or a chip. The apparatus may be mounted in the terminal device. In embodiments of this application, the chip system may include a chip, or may include the chip and another discrete component.
9. In embodiments of this application, a network device may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in the following in a broad sense, or may alternatively be the following names, such as a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a radiofrequency head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a device that bears a base station function in a future communication system, or the like. The base station may support networks using a same access technology or different access technologies. A specific technology and a specific device form that are used by the network device are not limited in embodiments of this application. The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station. In embodiments of this application, an apparatus configured to implement a function of the network device may be a terminal device, or may be an apparatus that can support the network device in implementing the function, for example, a chip system or a chip. The apparatus may be mounted in the network device. In embodiments of this application, the chip system may include a chip, or may include the chip and another discrete component. The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application.
10. A "protocol" in this application may be a standard protocol in the communication field, for example, may include a 4th generation (4th generation, 4G) network protocol, a 5th generation (5th generation, 5G) network protocol, an NR protocol, a 5.5G network protocol, and a related protocol applied to a future communication system. This is not limited in this application.

The technical solutions in embodiments of this application may be applied to a non-terrestrial network system like a satellite communication system, a high altitude platform station (high altitude platform station, HAPS) communication system, and an uncrewed aerial vehicle, for example, an integrated communication and navigation (integrated communication and navigation, IcaN) system, a global navigation satellite system (global navigation satellite system, GNSS), and an ultra-dense low-orbit satellite communication system. The satellite communication system may be integrated with a conventional mobile communication system. For example, the mobile communication system may be a 4th generation (4th generation, 4G) communication system (for example, an LTE system), a worldwide interoperability for microwave access (worldwide interoperability for microwave access, WiMAX) communication system, a 5th generation (5th generation, 5G) communication system (for example, an NR system), a future mobile communication system, or the like.

FIG. 7 is a diagram of an architecture of a communication system according to an embodiment of this application. The communication system may include a network side device and a terminal device. The network side device may include one or more satellite nodes (only two satellite nodes are shown in FIG. 7, and more or fewer satellite nodes may be further included) and a control node. The terminal device is in a multi-connection state. The multi-connection state may mean that the terminal device is separately connected to the one or more satellite nodes and the control node in the network side device.

A form of the terminal device is not limited in embodiments of this application. An apparatus configured to implement a function of the terminal device may be the terminal device, or may be an apparatus that can support the terminal device in implementing the function, for example, a chip system. The apparatus may be mounted in the terminal device or used in a manner of matching the terminal device. In embodiments of this application, the chip system may include a chip, or may include the chip and another discrete component.

The control node may be referred to as a terrestrial station device, a core network device, a hypercellular controller (HyperCell Controller), a network device, or the like. The control node may be an apparatus that is deployed on the ground and that provides a wireless communication function for the terminal device. The terrestrial station device is, for example, a device in a core network (core network, CN) in an existing mobile communication architecture (for example, a 3GPP access architecture of a 5G network) or a device in a core network in a future mobile communication architecture. As a bearer network, the core network provides an interface to a data network, provides communication connection, authentication, management, and policy control for the user equipment (UE), bears data services, and the like. The CN may further include an access and mobility management network element (access and mobility management function, AMF), a session management network element (session management function, SMF), an authentication server network element (authentication server function, AUSF), a policy control node (policy control function, PCF), a user plane function network element (user plane function, UPF), and the like. The AMF network element is configured to manage access and mobility of the UE, and is mainly responsible for functions such as UE authentication, UE mobility management, and UE paging.

In some possible scenarios, the control node is a network device. The network device may be used by the terminal device for communication. Alternatively, the network device may include an evolved NodeB (NodeB or eNB or e-NodeB, evolutional NodeB) in an LTE system or an LTE-advanced (LTE-advanced, LTE-A) system, for example, a conventional macro base station eNB and a micro base station eNB in a heterogeneous network scenario. Alternatively, the network device may include a next generation NodeB (next generation NodeB, gNB) in the NR system. Alternatively, the network device may include a transmission reception point (transmission reception point, TRP), a home NodeB (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like. Alternatively, the network device may include a base station in a non-terrestrial network (non-terrestrial network, NTN), that is, may be deployed on an airplane platform or a satellite. In the NTN, a network device may be used as a layer 1 (L1) relay (relay), may be used as a base station, or may be used as an integrated access and backhaul (integrated access and backhaul, IAB) node. Alternatively, the network device may be a device that is in IoT and that implements functions of a base station, for example, a device that is in uncrewed aerial vehicle communication, vehicle to everything (vehicle to everything, V2X), device to device(device to device, D2D), or machine to machine (machine to machine, M2M) and that implements the functions of the base station.

In some possible scenarios, the network device may alternatively be a module or unit that can implement some functions of a base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of the software module and the hardware module.

Optionally, the base station in embodiments of this application may include various forms of base stations, for example, a macro base station, a micro base station (or referred to as a small cell), a relay station, an access point, a home base station, a TRP, a transmitting point (transmitting point, TP), or a mobile switching center. This is not specifically limited in embodiments of this application.

A form of the network device is not limited in embodiments of this application. An apparatus configured to implement a function of the network device may be the network device, or may be an apparatus that can support the network device in implementing the function, for example, a chip system. The apparatus may be mounted in the network device or used in matching the network device.

The satellite node in FIG. 7 may be a low earth orbit (low earth orbit, LEO) satellite, a non-geostationary orbit (non-geostationary earth orbit, NGEO) satellite, or the like.

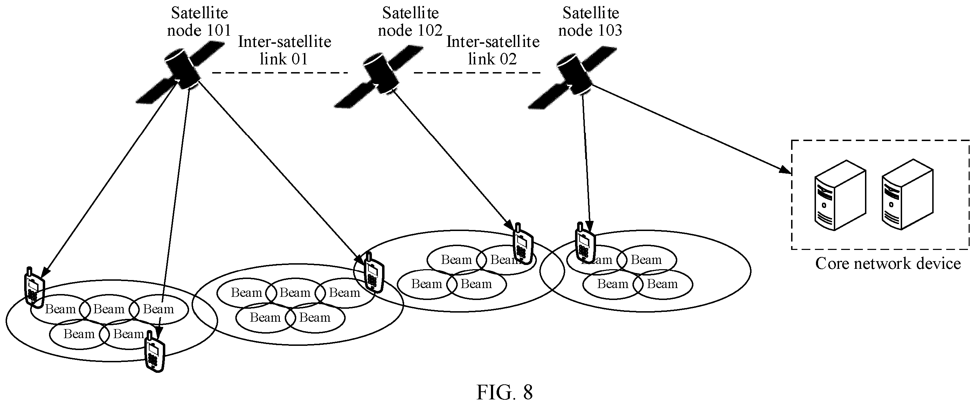

For example, FIG. 8 is a diagram of a satellite communication system according to an embodiment of this application. The satellite communication system includes a satellite node 101, a satellite node 102, and a satellite node 103. The satellite node 101 and the satellite node 102 may be connected through an inter-satellite link 01, and the satellite node 102 and the satellite node 103 may be connected through an inter-satellite link 02. Each satellite node may provide some or all of a communication service, a navigation service, a positioning service, and the like for the terminal device through a plurality of beams. In this scenario, the satellite node is an LEO satellite, and the satellite node 103 is connected to a terrestrial station device (for example, a core network device in FIG. 8).

The satellite node uses the plurality of beams to cover a service zone, and different beams may be used to perform communication in one or more manners of time division, frequency division, and space division. The satellite node may further perform wireless communication with the terminal device by broadcasting a communication signal, a navigation signal, and the like, and the satellite node may perform wireless communication with the control node.

The satellite node mentioned in embodiments of this application may be a satellite base station, may include an orbit receiver or a repeater configured to forward information, or may be a network device mounted on the satellite node. This is not limited.

A terminal node in embodiments of this application is a terminal node in a multi-connection state. The multi-connection state means that the terminal node is separately connected to the satellite node and the control node. The satellite node may include a primary satellite node and a secondary satellite node. It may be understood that the primary satellite node is equivalent to a primary cell of the terminal node, and the secondary satellite node is equivalent to a secondary cell of the terminal node. For similar parts, refer to the related descriptions of the foregoing RRC connected state. Details are not described herein again.

It should be noted that FIG. 7 and FIG. 8 are exemplary accompanying drawings, and a quantity of devices shown in FIG. 7 and FIG. 8 and names of interfaces between devices in FIG. 7 and FIG. 8 are not limited. In addition to the network elements shown in FIG. 7 and FIG. 8, the communication systems shown in FIG. 7 and FIG. 8 may further include another device, for example, a network device. This is not limited.

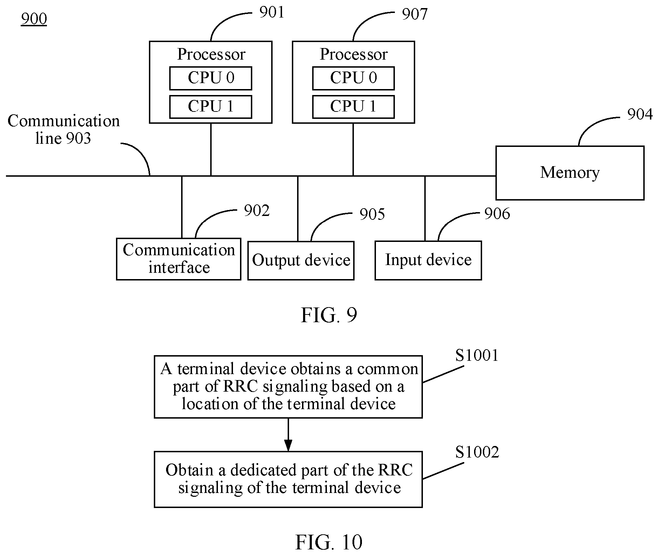

During specific implementation, the devices in FIG. 7 and FIG. 8 may use a composition structure shown in FIG. 9, or include components shown in FIG. 9. FIG. 9 is a diagram of composition of a communication apparatus 900 according to an embodiment of this application. The communication apparatus 900 may be a terminal device or a chip or a system on chip (system on chip, SoC) in the terminal device. Alternatively, the communication apparatus 900 may be a control node or a chip or a system on chip in the control node. Alternatively, the communication apparatus 900 may be a satellite node or a chip or a system on chip in the satellite node. As shown in FIG. 9, the communication apparatus 900 includes a processor 901, a communication interface 902, and a communication line 903.

Further, the communication apparatus 900 may further include a memory 904. The processor 901, the memory 904, and the communication interface 902 may be connected to each other through the communication line 903.

The processor 901 is a central processing unit (central processing unit, CPU), a network processor (network processor, NP), a digital signal processor (digital signal processor, DSP), a microprocessor, a microcontroller, a programmable logic device (programmable logic device, PLD), or any combination thereof. Alternatively, the processor 901 may be another apparatus having a processing function, for example, a circuit, a component, or a software module. This is not limited.

The communication interface 902 is configured to communicate with another device or another communication network. The another communication network may be an Ethernet, a radio access network (radio access network, RAN), a wireless local area network (wireless local area network, WLAN), or the like. The communication interface 902 may be a module, a circuit, a communication interface, or any apparatus that can implement communication.

The communication line 903 is configured to perform information transmission between parts included in the communication apparatus 900.

The memory 904 is configured to store a computer program or instructions.

The memory 904 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), magnetic disk storage medium or another magnetic storage device, or the like. This is not limited.

It should be noted that the memory 904 may exist independently of the processor 901, or may be integrated with the processor 901. The memory 904 may be configured to store instructions, program code, some data, or the like. The memory 904 may be located in the communication apparatus 900, or may be located outside the communication apparatus 900. This is not limited. The processor 901 is configured to execute the computer program or the instructions, to implement a communication method that is applied to short-distance wireless communication and that is provided in the following embodiments of this application.

In an example, the processor 901 may include one or more CPUs, for example, a CPU 0 and a CPU 1 in FIG. 9.

In an optional implementation, the communication apparatus 900 includes a plurality of processors. For example, in addition to the processor 901 in FIG. 9, the communication apparatus 900 may further include a processor 907.

In an optional implementation, the communication apparatus 900 further includes an output device 905 and an input device 906. For example, the input device 906 is a device like a keyboard, a mouse, a microphone, or a joystick, and the output device 905 is a device like a display or a speaker (speaker).

It should be noted that the communication apparatus 900 may be a desktop computer, a portable computer, a network server, a mobile phone, a tablet computer, a wireless terminal, an embedded device, a chip system, or a device having a similar structure in FIG. 9. In addition, the composition structure shown in FIG. 9 does not constitute a limitation on the network device and the terminal device. In addition to the components shown in FIG. 9, the network device and the terminal device may include more or fewer components than those shown in the figure, or combine some components, or have different component arrangements.

In embodiments of this application, the chip system may include a chip, or may include the chip and another discrete component.

In addition, actions, terms, and the like in embodiments of this application may be mutually referenced. This is not limited. In embodiments of this application, names of information exchanged between devices, names of parameters in the information, or the like are merely examples. Other names may alternatively be used during specific implementation. This is not limited.

Based on the communication systems shown in FIG. 7 and FIG. 8, FIG. 10 shows a communication method according to an embodiment of this application. The method includes S1001 and S1002.

S1001: A terminal device obtains a common part of RRC signaling based on a location of the terminal device.

The common part may also be referred to as a first part, first information, a first parameter, common information, a common parameter, a common resource, or the like. This is not limited. The common part is applicable to a first zone. The first zone includes the location of the terminal device, or the terminal device is located in the first zone.

In this embodiment of this application, the common part may be a part used by all terminal devices in the first zone. For example, the common part may be an RRC-common part. The RRC-common part may include at least one of a common-SMTC configuration, a common-BWP configuration, and a common-RACH configuration. Certainly, the common part may further include other configurations/information, for example, may further include a reference location and a measurement priority of a control node. The common-RACH may include one or more of a random access occasion (random access channel occasion, RO) time domain configuration (for example, prach-configurationInde), a preamble (preamble), a frequency division multiplexing factor (for example, message1-frequency division multiplexing, msg1-FDM), and the like. This is not limited. The configuration in the common part may be used by the terminal device to access a cell (or a satellite node). For details, refer to the conventional technology. Details are not described.

In this embodiment of this application, a periodicity (periodicity) and duration (duration) of the common-SMTC are the same as those of an SMTC 1, and a maximum periodicity may be 160 ms. The SMTC 1 may be an SMTC of a synchronization signal block (synchronization signal block, SSB) signal.

In an example, the terminal device may obtain, based on the location of the terminal device, the common part of the RRC signaling from a control node whose service zone includes the location of the terminal device. For example, the terminal device may send, to the control node, a message used to request the common part of the RRC signaling. Correspondingly, after receiving the message, the control node may send the common part of the RRC signaling to the terminal device. For another example, when the terminal device initially establishes a communication connection to the control node, the control node may send the common part of the RRC signaling to the terminal device.

In another example, the terminal device may send the location of the terminal device to a control node. After obtaining the location of the terminal device, the control node may configure the common part of the RRC signaling for the terminal device based on the location of the terminal device, or the control node sends the common part of the RRC signaling to the terminal device.

In another example, there are a plurality of control nodes whose service zones include the first zone. The terminal device may select one control node from the plurality of control nodes, and obtain the common part of the RRC signaling from the selected control node.

For example, the terminal device may select the control node based on distances between the terminal device and the plurality of control nodes. For example, a distance between the selected control node and the terminal device is less than a preset threshold. The preset threshold may be set based on a requirement. This is not limited.

For another example, the terminal device may select a control node based on signal strength between the terminal device and the plurality of control nodes, for example, signal strength between the selected control node and the terminal device is greater than a preset threshold. The preset threshold may be set based on a requirement. This is not limited.

In an application scenario, the control node is a terrestrial node. The terrestrial node may be associated with a geographical location. One terrestrial node may provide a service for a terminal device in a service zone. For example, the terrestrial node may be referred to as a hypercell controller (hypercell controller).

In this application scenario, the terminal device may determine, based on distances between the terminal device and terrestrial nodes, a terrestrial node from which the common part is obtained. For example, the terminal device may obtain the common part from a nearest terrestrial node. The distance between the terminal device and the terrestrial node may be a straight-line distance in geographical (or three-dimensional space) or a distance calculated in another agreed manner.

In some embodiments, a location of the terrestrial node is fixed, and a service zone of the terrestrial node is fixed. Therefore, when the terminal device moves in the service zone, the needed common part remains unchanged. Therefore, the terminal device may not update the common part of the RRC signaling.

In another application scenario, the control node is a satellite node, for example, the control node is attached to the satellite node.

In some cases, a beam position corresponding to a beam of the satellite node may remain unchanged, for example, the satellite node may be a satellite node in the foregoing earth-fixed satellite communication system. In this way, the terminal device may obtain the common part of the RRC signaling from the satellite node.

In some other cases, a beam position corresponding to a beam of the satellite node changes, for example, if the satellite node is a satellite node in the foregoing earth-moving satellite communication system, the terminal device may obtain the common part from a satellite node whose beam covers a zone in which the terminal device is located.

In this embodiment of this application, the service zones of the plurality of control nodes each include a zone (namely, the first zone) in which the terminal device is located, and the terminal device may further select a control node based on activation statuses of the plurality of control nodes. For details, refer to related descriptions in the following Embodiment 4. Details are not described herein.

In another application scenario, if the location of the terminal device changes, for example, the terminal device moves from a zone to another zone, the terminal device may obtain a common part of new RRC signaling from a control node to which the new zone belongs, to update the common part of the RRC signaling on the terminal device.

S1002: Obtain a dedicated part of the RRC signaling of the terminal device.

The dedicated part may also be referred to as a second part, second information, a second parameter, dedicated information, a dedicated parameter, a dedicated resource, or the like. This is not limited.

In this embodiment of this application, the dedicated part may be a part dedicated to the terminal device, and different terminal devices have different dedicated parts. For example, the dedicated part may be an RRC-specific part. The RRC-specific part may include one or more of a dedicated (Dedicated)-SMTC configuration (there may be a plurality of dedicated-SMTC configurations), a dedicated-BWP, and a dedicated-RACH configuration. Certainly, the dedicated part may further include other configurations/information, for example, may further include one or more of an SMTC-offset value (offset), ephemeris information of a satellite node, a plurality of dedicated-RACH extension factors, and a quantity of consecutive RO frames. This is not limited.

The ephemeris information of the satellite node may include galaxy information of different adjacent satellite nodes at different moments.

In some embodiments, the SMTC-offset is used to supplement delays from a UE to a plurality of satellite nodes. In this way, the terminal device may accurately measure different satellite nodes or cells based on the plurality of dedicated-SMTCs and corresponding SMTC-offsets, to resolve a problem of a delay difference between measurements of different satellite nodes/cells. When accessing different cells/beam positions, the terminal device may access the cells/beam positions based on the plurality of dedicated-RACH extension factors and the quantity of consecutive RO frames, to meet a non-uniform access requirement of the terminal device when accessing different cells/beam positions.

In a possible implementation, the terminal device may determine, based on a requirement of the terminal device, whether to obtain the dedicated part of the RRC signaling. For example, the terminal device may obtain the dedicated part of the RRC signaling based on time information. For another example, the terminal device may determine, based on requirement information, whether to obtain the dedicated part of the RRC signaling.

In an example, the terminal device may send requirement information to a satellite node, where the requirement information may be used to obtain the dedicated part of the RRC signaling of the terminal device. The satellite node obtains the requirement information of the terminal device, and configures the dedicated part of the RRC signaling of the terminal device for the terminal device, or sends the dedicated part of the RRC signaling of the terminal device to the terminal device.

In an example, because a satellite node frequently moves, the terminal device may determine, based on clock information of the terminal device and ephemeris information, a satellite node corresponding to current time, and obtain the dedicated part of the RRC signaling of the terminal device from the determined satellite node. The ephemeris information may indicate location information corresponding to a satellite node set within a given time period.

For example, conversion information of satellite nodes at different time may be preconfigured for the terminal device. The conversion information may be information (for example, ephemeris information) about satellite nodes that provide services for the first zone (namely, coverage includes the first zone) at different time. In this way, based on the conversion information, the terminal device may determine, based on current time, a satellite node that can be accessed, and obtain the dedicated part of the RRC signaling of the terminal device from the satellite node.

For another example, activation statuses (including an activated state, a deactivated state, a released state, and the like) of satellite nodes at different time may be further preconfigured for the terminal device. In this way, the terminal device may obtain the dedicated part of the RRC signaling based on an activation status of a satellite node.

In an application scenario (for example, a satellite system is the foregoing earth-fixed satellite communication system), there are a plurality of satellite nodes covering the first zone at specific time. The terminal device may obtain the dedicated part of the RRC signaling of the terminal device from a satellite node in an activated state in the plurality of satellite nodes.

For another example, based on a consecutive handover feature of a satellite network, conversion information of satellite nodes within a preset time period may be preconfigured for the terminal device. For example, from time t1 to time t2, satellite nodes that provide services for the terminal device are sequentially a satellite node 1, a satellite node 2, and a satellite node 3. In this way, based on conversion information of the satellites, the terminal device may determine, in advance, satellite nodes that can be accessed at different time. In this way, the terminal device may obtain, based on current time information, the dedicated part of the RRC signaling of the terminal device from a satellite node that can be accessed.

In this embodiment of this application, the activation status and the conversion information that are of the satellite node are preconfigured for the terminal device. Therefore, a network side device does not need to configure the information for the terminal device for a plurality of times, thereby reducing configuration signaling overheads.

In this embodiment of this application, the RRC signaling that needs to be obtained by the terminal device may include the common part and the dedicated part, and the common part is applicable to a zone in which the terminal device is located. In this way, the terminal device may obtain the common part based on the location of the terminal device. Therefore, when the terminal device moves in the first zone, because the common part of the RRC signaling of the terminal device remains unchanged, the terminal device does not need to update the common part of the RRC signaling of the terminal device, to reduce signaling overheads.

In a satellite node scenario, a primary cell (PCell) and a secondary cell (PScell) may be cells of different satellite nodes, or may be different cells of a same satellite node. A satellite node to which the primary cell belongs may be referred to as a primary satellite node, and a satellite node to which the secondary cell belongs may be referred to as a secondary satellite node.

In some embodiments (Embodiment 1), the satellite node may include a primary satellite node and a secondary satellite node. The dedicated part may include a first dedicated part and a second dedicated part. The first dedicated part is a part related to the primary satellite node, and the second dedicated part is a part related to the secondary satellite node.

In a scenario, a cell of the primary satellite node is the foregoing MCG, and a cell of the secondary satellite node is the foregoing SCG. In other words, if the PCell is a cell of the primary satellite node, and the PScell is a cell of the secondary satellite node, the first dedicated part may be RRC-PCell-specific, and the second dedicated part may be RRC-PScell-specific.

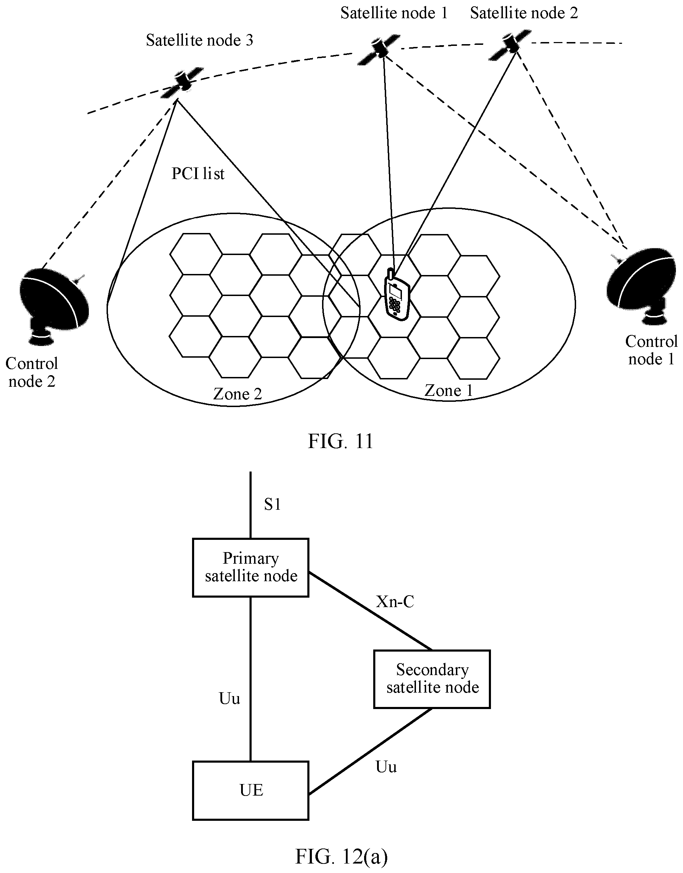

For example, FIG. 11 is a diagram of a communication system. The communication system includes a satellite node 1, a satellite node 2, and a satellite node 3. In FIG. 11, a control node 1 provides a service for a terminal device in a zone 1, and a control node 2 provides a service for a terminal device in a zone 2. The satellite node 1 is a primary satellite node, and the satellite node 2 is a secondary satellite node. The first dedicated part is related to the satellite node 1, and the second dedicated part is related to the satellite node 2. The satellite node 3 may configure a physical cell identifier (physical cell identifier, PCI) list (list) for a terminal device. The PCI list may include at least one physical cell identifier within coverage of the satellite node 3.

In a possible implementation, the terminal device may obtain the dedicated part of the RRC signaling of the terminal device based on an interface type for message transmission between the control node and the satellite node.

The interface type for message transmission may include Xn-C (an interface) and Hs-C (an interface). The Xn-C may be the foregoing Xn interface. The Hs-C may be an existing interface (for example, an F1-like interface) of the satellite node, or may be a newly configured interface (namely, a newly defined interface) of the satellite node.

In a scenario, as shown in FIG. 12(a), when a message is transmitted between a primary satellite node and a secondary satellite node through Xn-C, the terminal device may obtain the first dedicated part and the second dedicated part of the RRC signaling of the terminal device from the primary satellite node. In some embodiments, a part that is in the primary satellite node and that is related to the secondary satellite node may be obtained by the primary satellite node from the secondary satellite node, or may be preconfigured or specified. This is not limited.

It can be learned from the foregoing descriptions that, when a message is transmitted between satellite nodes through the Xn interface, problems such as instability and a delay may exist. Therefore, the terminal device may obtain, from the primary satellite node, the part related to the secondary satellite node, to reduce a delay.

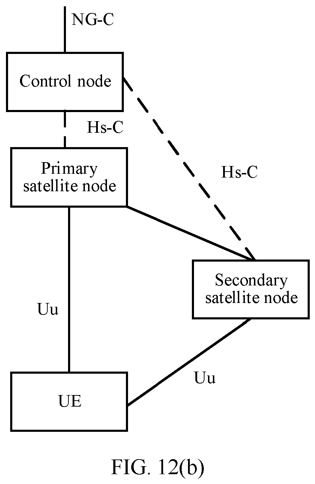

In another scenario, as shown in FIG. 12(b), when a message is transmitted between a control node and a satellite node through Hs-C, the terminal device may obtain the first dedicated part of the RRC signaling of the terminal device from a primary satellite node, and obtain the second dedicated part of the RRC signaling of the terminal device from the primary satellite node or the control node.

In another possible implementation, the terminal device may obtain the second dedicated part of the RRC signaling of the terminal device based on a signaling configuration status after the terminal device and the secondary satellite node.

In an example, when transmission signaling is configured between the terminal device and the secondary satellite node, the terminal device may obtain the second dedicated part of the RRC signaling of the terminal device from the secondary satellite node.

In another example, when no transmission signaling is configured between the terminal device and the secondary satellite node, the terminal device may obtain the second dedicated part of the RRC signaling of the terminal device from the primary satellite node or the control node.

The transmission signaling may be signaling exchanged between the terminal device and the secondary satellite node, for example, may be a radio signaling bearer (signaling radio bearer, SRB) 3. In a case of EN-DC, the SRB 3 may be configured to transmit some NR RRC messages between the terminal device and a secondary base station (secondary gNodeB, SgNB) through an NR radio interface. Based on the SRB 3, the terminal device may exchange information with the secondary satellite node. In this embodiment of this application, a satellite node may be used as a gNB, one satellite node may be connected to a plurality of gNBs, or a plurality of satellite nodes may be connected to a same gNB. This is not limited.

For example, when no signaling bearer of the SRB 3 is configured on a network side, the terminal device may obtain, from the primary satellite node, an RRC-specific part provided by the PCell, and obtain, from the control node and/or the primary satellite node, a forwarded RRC-specific part provided by the PScell. Forwarding may refer to forwarding signaling. For example, the control node and/or the primary satellite node may obtain, from the secondary satellite node, the RRC-specific part provided by the PScell, and forward the obtained RRC-specific part provided by the PScell to the terminal device.

For another example, when a signaling bearer of the SRB 3 is configured on a network side, the terminal device may obtain, from the primary satellite node, an RRC-specific part provided by the PCell, and obtain, from the secondary satellite node, an RRC-specific part provided by the PScell.

In some embodiments, the terminal device may determine, based on a signaling configuration status of a network side device, a node that obtains the RRC-specific part provided by the PCell. In other words, the terminal device may obtain the dedicated part of the RRC signaling of the terminal device from the primary satellite node, the control node, or the secondary satellite node. However, a node from which the terminal device obtains the common part of the RRC signaling remains unchanged, and the common part of the RRC signaling is still obtained from the control node.

Further, with reference to the interface type for message transmission, in this embodiment of this application, obtaining the RRC signaling of the terminal device may include the following scenario 1 to scenario 3.

Scenario 1: When a message is transmitted between the primary satellite node and the secondary satellite node through the Xn-C, and no signaling bearer of the SRB 3 is configured on the network side, the terminal device may obtain a dedicated part that is of RRC signaling and that is in a PCell from the primary satellite node and a dedicated part that is of the RRC signaling and that is in a PScell and forwarded by the primary satellite node, and obtain a common part of the RRC signaling from the control node.

Scenario 2: When a message is transmitted between the control node and the secondary satellite node through the Hs-C, and no signaling bearer of the SRB 3 is configured on the network side, the terminal device may obtain a dedicated part that is of RRC signaling and that is in a PCell from the primary satellite node, obtain a forwarded dedicated part that is of the RRC signaling and that is in a PScell from the control node and/or the primary satellite node, and obtain a common part of the RRC signaling from the control node.

Scenario 3: When a signaling bearer of the SRB 3 is configured on the network side, the terminal device may obtain a dedicated part that is of RRC signaling and that is in a PScell from the secondary satellite node.

In the scenario 3, because the SRB 3 is configured on the network side, that is, the terminal device may exchange signaling with the secondary satellite node, the terminal device may obtain the dedicated part that is of the RRC signaling and that is in the PScell from the secondary satellite node, to avoid a data loss problem that occurs when signaling is forwarded, and reduce a transmission delay.

In some other embodiments (Embodiment 2), a timer (Timer-DC) is configured for the terminal device. When the timer expires, the terminal device may send a retransmission request, where the retransmission request is used to request to retransmit unreceived data. Start time of the timer may be time at which the terminal device receives data from any node. In other words, when receiving the data, the terminal device may control the timer to start timing, and when the timer expires, the terminal device may send the retransmission request, for example, may send the retransmission request to a node corresponding to the received data, or may send the retransmission request to each connected node. This is not limited.

For example, in a scenario in which a satellite node sends data to the terminal device, because a message transmission path between the satellite node and the terminal device is long, data transmission is easily interfered by an external factor, for example, a magnetic field or an interference signal, affecting data transmission. The terminal device waits for a long time when receiving data. Therefore, to reduce a waiting delay of data transmission, the terminal device may send the retransmission request to the network side device (the satellite node) when the timer expires. In this way, after receiving the retransmission request, the network side device may resend the data to the terminal device.

In this embodiment of this application, the timer may be configured by the satellite node for the terminal device. The following provides descriptions with reference to specific application scenarios.

Scenario 4: Split bearer (Split bearer) scenario, that is, a primary cell group and a secondary cell group may simultaneously perform data transmission with a terminal device, to implement load balancing and throughput improvement.

The split bearer may be transmitting data to the terminal device in a data splitting manner. The split bearer may include an MCG split bearer and an SCG split bearer. For related descriptions of the MCG split bearer and the SCG split bearer, refer to the conventional technology. Details are not described.

In an example, a split bearer manner of a communication system is the MCG split bearer, and the timer may be configured by the primary satellite node (namely, the PCell) for the terminal device. Correspondingly, when receiving data sent by the primary satellite node, the terminal device controls the timer to start timing, and when the timer expires, the terminal device may send a retransmission request to the primary satellite node. After receiving the retransmission request from the terminal device, the primary satellite node may resend the data to the terminal device, for example, may resend a PDCP data packet.

In another example, a split bearer manner of a communication system is the MCG split bearer, and the timer may be configured by the secondary satellite node (namely, the PScell) for the terminal device. Correspondingly, when receiving data sent by the secondary satellite node, the terminal device controls the timer to start timing, and when the timer expires, the terminal device may send a retransmission request to the secondary satellite node. After receiving the retransmission request from the terminal device, the secondary satellite node may resend the data to the terminal device.

Scenario 5: Dual active protocol stack (dual active protocol stack, DAPS) handover scenario.

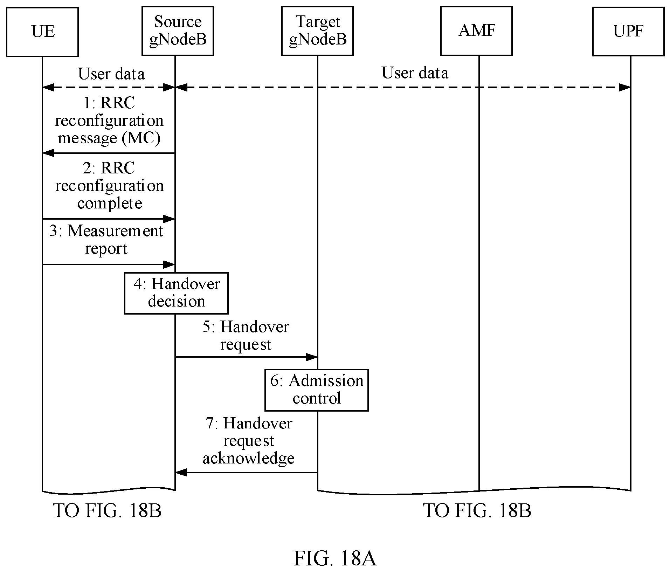

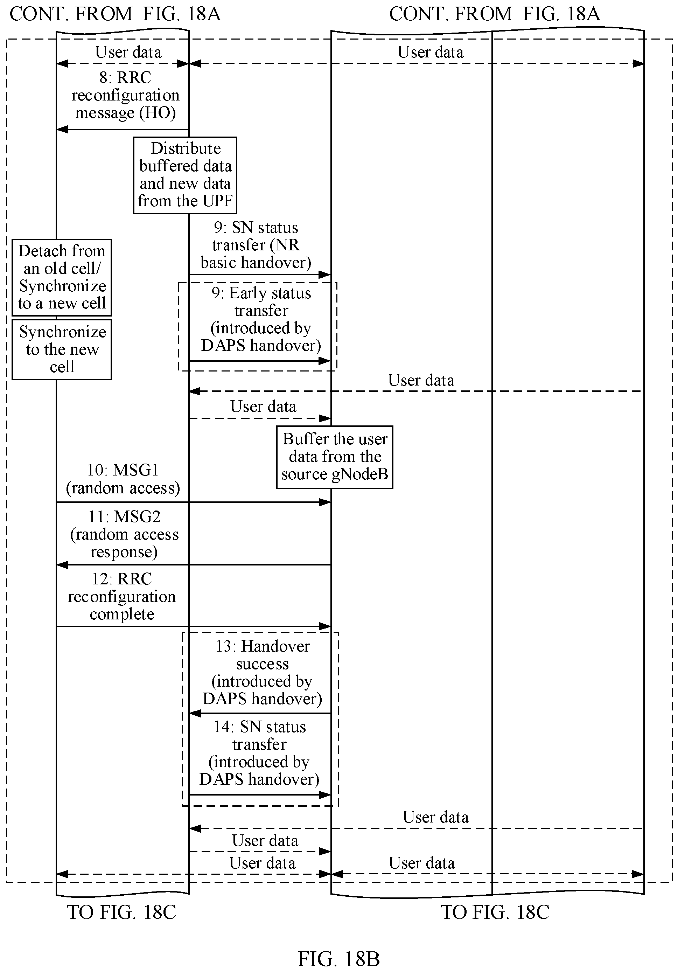

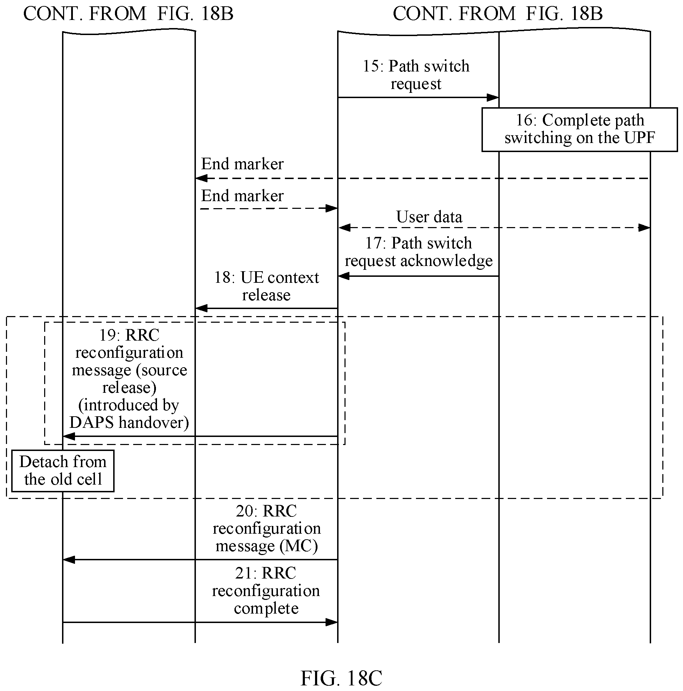

FIG. 18A to FIG. 18C each are a diagram of a handover scenario. In FIG. 18A to FIG. 18C:
1: A source gNodeB (source gNodeB) delivers measurement control (measurement control, MC) to a UE by using an RRC reconfiguration (RRCReconfiguration) message, where the MC includes a measurement object (intra-frequency/inter-frequency), a measurement report configuration, a GAP configuration, and the like.
2: The UE returns RRC reconfiguration complete (RRCReconfigurationComplete) to the source gNodeB.
3: The UE performs measurement based on the received measurement control message, and after determining that an event condition is met, the UE reports a measurement report to the source gNodeB.
4: After receiving the measurement report, the source gNodeB determines a handover policy and a target cell/frequency based on the measurement result.
5: The source gNodeB sends a HANDOVER REQUEST message to an AMF through an NG interface to initiate a handover request, where the HANDOVER REQUEST message includes a target gNodeBId, a protocol data unit session (PDU Session) list for data forwarding, and the like.
   The AMF sends a HANDOVER REQUEST to a target gNodeB serving a specified target cell to initiate the handover request.
6: After receiving the handover request, the target gNodeB performs admission control, and allocates a UE instance and a transmission resource after admission is allowed.
7: The target gNodeB returns handover request acknowledge (HANDOVER REQUEST ACKNOWLEDGE) to the AMF, to allow incoming handover. If incoming handover of some PDU sessions fails, the message needs to carry a list of failed PDU sessions.
   The AMF sends a handover command (HANDOVER COMMAND) to the source gNodeB, where the message includes an address and a list of TEIDs used for forwarding, and a list of bearers to be released.
8: The source gNodeB sends RRCReconfiguration to the UE, to request the UE to perform handover to the target cell; and the source gNodeB distributes buffered data and new data from a UPF.
9: The source gNodeB sends sequence number (sequence number, SN) status transfer (SN STATUS TRANSFER) (NR basic handover) to the target gNodeB; and in a DAPS handover scenario, the source gNodeB sends early status transfer (early status transfer) to the target gNodeB.
   The source gNodeB sends a PDCP SN to the AMF through UPLINK RAN STATUS TRANSFER.
   The AMF sends the PDCP SN to the target gNodeB through a DOWNLINK RAN STATUS TRANSFER message.
10: The UE initiates, by sending MSG1 that carries a dedicated preamble, a non-contention-based random access to the target cell served by the target gNodeB.
11: The target gNodeB returns an MSG2 message.
12: The UE sends RRCReconfigurationComplete to the target gNodeB, indicating that the UE completes handover to the target cell through an air interface.
13: In the DAPS handover scenario, the target gNodeB sends HANDOVER SUCCESS to the source gNodeB.
14: In the DAPS handover scenario, if the source gNodeB does not send the early status transfer to the target gNodeB, the source gNodeB sends the SN STATUS TRANSFER to the target gNodeB.
15: The target gNodeB sends a path switch request (PATH SWITCH REQUEST) to the AMF.
16: Complete path switching on the UPF.
17: The AMF sends PATH SWITCH REQUEST ACKNOWLEDGE to the target gNodeB.
18: The target gNodeB sends context release (CONTEXT RELEASE) of the UE to the source gNodeB.
19: In the DAPS handover scenario, the target gNodeB sends RRCReconfiguration (source release (SOURCE RELEASE)) to the UE.
20: After the UE is handed over to the target cell, the target gNodeB delivers measurement control (measurement control, MC) information of a new cell to the UE through RRCReconfiguration.
21: After receiving the new measurement control delivered by the target gNodeB, the UE returns RRCReconfigurationComplete.

The DAPS handover scenario may be a handover process in which the terminal device maintains a connection to a source cell and/or a source base station after receiving an RRC message (a handover command) and performing handover, and releases the source cell after successfully performing random access to a target cell/node. For details, refer to the conventional technology. Details are not described. In this embodiment of this application, the source cell may be a cell currently accessed by the terminal device, and the target cell may be a cell to which the terminal device needs to be handed over. The source cell and the target cell may be cells of a same satellite node, or may be cells of different satellite nodes.

In a scenario, the source cell and the target cell are cells of different satellite nodes. A satellite node to which the source cell belongs may be referred to as a source satellite node, and a satellite node to which the target cell belongs may be referred to as a target satellite node. When the terminal device needs to be handed over from the source cell to the target cell, that is, the terminal device needs to be handed over from the source satellite node to the target satellite node, a timer may be configured by the source satellite node or the target satellite node for the terminal device. For example, the satellite node may configure the timer for the terminal device through RRC configuration. The source satellite node and the target satellite node may alternatively transmit related information of the timer through information exchange. For example, the related information of the timer may be transmitted by using information such as a handover request (handover request)/a handover request response (ack).

In a possible implementation, duration of the timer may be determined based on a data transmission delay between the source satellite node and the target satellite node. For example, the duration of the timer may be greater than or equal to the data transmission delay between the source satellite node and the target satellite node.

In another possible implementation, duration of the timer may be determined based on a transmission delay between a satellite node and the terminal device. A longer transmission delay indicates longer duration of the timer.

In some cases, for example, data splitting, that is, when data is transmitted to the terminal device through a plurality of satellite nodes, the duration of the timer may be determined based on a largest value of data transmission delays between the plurality of satellite nodes and the terminal device, for example, the duration of the timer may be set to be greater than or equal to the largest value of the data transmission delays between the plurality of satellite nodes and the terminal device. For example, the terminal device needs to receive data from a satellite node 1 and a satellite node 2. If a data transmission delay T1 between the satellite node 1 and the terminal device is greater than a data transmission delay T2 between the satellite node 2 and the terminal device, the duration of the timer may be greater than or equal to T2.

In some scenarios, that the timer expires may be further used to trigger early status transfer in the DAPS handover. For example, when the timer expires, the terminal device may send indication information to the satellite node, that is, send the indication information indicating whether data is received. Based on the indication information, the satellite node may determine whether the terminal device receives the data, to assist the satellite node in clearing a buffer. For example, if the indication information indicates that the data has been received, the satellite node may clear the buffer (for example, a packet data convergence protocol PDCP buffer).

Based on this embodiment, when the timer expires, the terminal device requests the network side device to retransmit data, to improve data receiving efficiency. In addition, a waiting delay can be further reduced.

In some embodiments (Embodiment 3), in this embodiment of this application, the terminal device may further report related information of satellite nodes at different locations within different time periods.

The related information of the satellite nodes may include historical information of satellite nodes accessed by the terminal device within different time periods and/or historical information of satellite nodes accessed by the terminal device at different locations. The satellite node may include a primary satellite node and a secondary satellite node. The historical information may include time-related information and location-related information. Certainly, the historical information may further include other information, for example, data transmission duration between the terminal device and the satellite node, a data transmission delay between the terminal device and the satellite node, and signal quality of the satellite node.

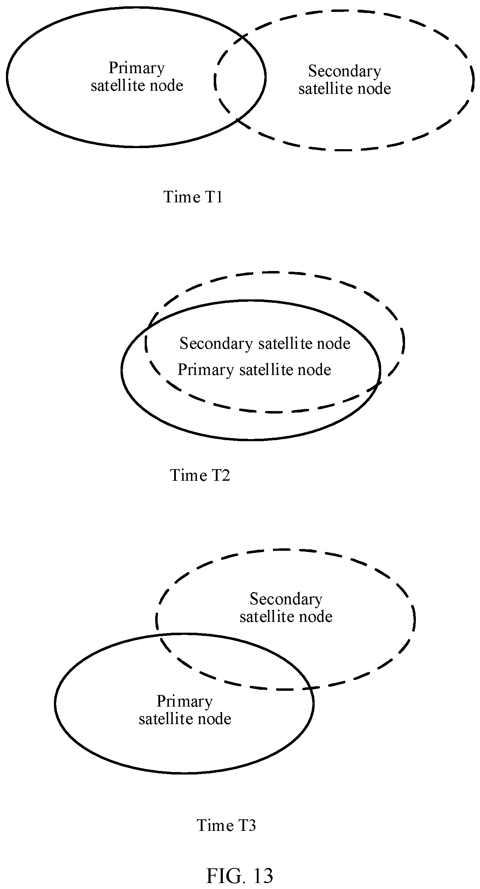

The following describes the time-related information and the location-related information.
1. The time-related information may include mapping relationships and relative location relationships between primary satellite nodes and secondary satellite nodes within different time periods. An indication manner of a time period may be an implicit indication or an explicit indication. For example, the time period may be represented in a form of a system frame number (system frame number, SFN), epoch time (epoch time), or worldwide standard time (coordinated universal time, UTC)+duration.
   For example, FIG. 13 shows relative location relationships between a primary satellite node (PCell) and a secondary satellite node (PScell) within different time periods. It can be learned from FIG. 13 that due to movement of the satellite node, relative location relationships between the primary satellite node and the secondary satellite node are different within different time periods. Based on this, signal strength or other parameters between the terminal device and the primary satellite node and between the terminal device and the secondary satellite node may also be different. Therefore, when another terminal device needs to access the satellite node subsequently, the network side may perform mobility management based on the relative location relationship. FIG. 13 shows only relative location relationships between one primary satellite node and one secondary satellite node. Certainly, the terminal device may further report relative location relationships between one primary satellite node and a plurality of secondary satellite nodes.
2. The location-related information may include one or more of a reference point location of the primary satellite node/the secondary satellite node, a reference point identifier of the terminal device, a beam position identifier, an elevation angle/an azimuth angle of the terminal device, and the like.

When receiving related information of satellite nodes within different time periods and/or related information of satellite nodes at different locations that are/is reported by the terminal device, the network side device may optimize mobility management based on the information. For example, the network side device may select an appropriate secondary satellite node from a plurality of satellite nodes for the terminal device based on the information, to reduce a propagation delay, reduce inter-satellite interference, and improve transmission quality.

In some embodiments (Embodiment 4), status information of satellite nodes may be further preconfigured for the terminal device.

The status information of the satellite nodes may be activation statuses of primary satellite nodes and secondary satellite nodes and status conversion relationships for the primary satellite nodes and the secondary satellite nodes within different time periods. For the activation status, refer to the related descriptions in S1002. Details are not described herein again. The status conversion relationships may be conversion relationships for the primary satellite nodes and the secondary satellite nodes within different time periods.

In an example, the status information of the satellite node may include an identifier of a satellite node within each of a plurality of time periods and/or an activation status of the satellite node within each of the plurality of time periods. For example, the status information of the satellite node may include one or more of the following: within a time period [t1, t2], a PCell ID-PCell status, and a PScell ID-PScell status; and within a time period [t3, t4], a PCell ID-PCell status, and a PScell ID-PScell status. Certainly, the status information of the satellite nodes may further include identifiers and activation statuses of primary satellite nodes and secondary satellite nodes within more time periods.

In this embodiment of this application, [] indicates that data is included. For example, the time period [t1, t2] represents a time period from time t1 (where the time t1 is included) to time t2 (where the time t2 is included).

In another example, based on a consecutive handover feature of a satellite network, the status conversion relationships configured for the terminal device may be conversion relationships for satellite nodes on a PCell/PScell chain (chain) within a preset time period or a given time period. In this way, the satellite nodes in the chain are sequentially converted from a PScell to a PCell, to implement consecutive DAPS handover and multi-connection communication of the terminal device.

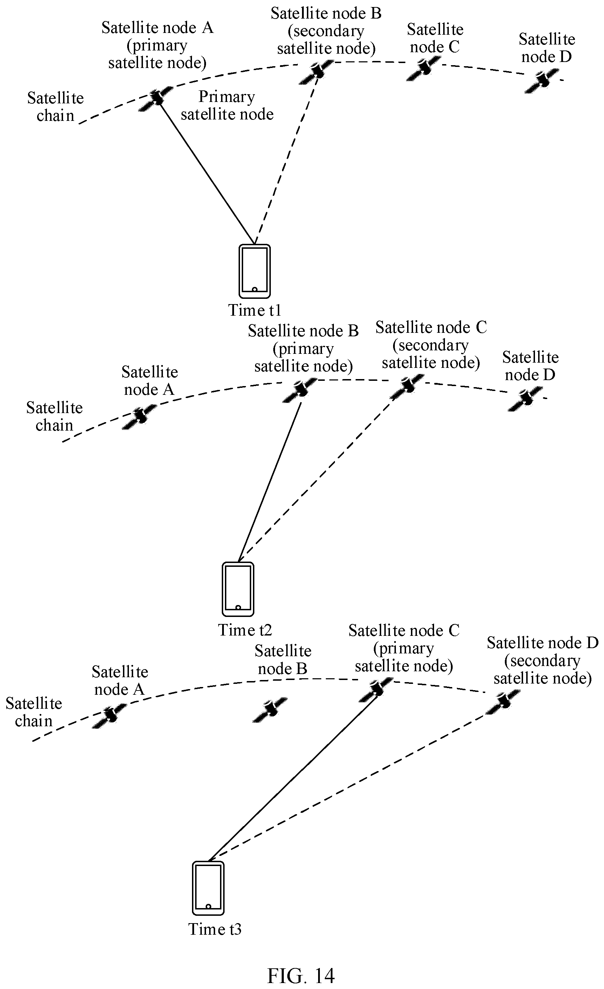

For example, as shown in FIG. 14, from time t1 to time t3, conversion information for a PCell is: from a satellite node A to a satellite node B to a satellite node C to a satellite node D, and a conversion relationship fora PScell is: from the satellite node B to the satellite node C to the satellite node D.

In a possible implementation, with reference to S1002, that the terminal device may obtain the dedicated part of the RRC signaling based on the activation status of the satellite node may specifically include: The terminal device may obtain the dedicated part from a satellite node in an activated state based on the preconfigured activation status. Alternatively, the terminal device may determine a primary satellite node and a secondary satellite node based on a preset status conversion relationship for a satellite node, and obtain the dedicated part from the primary satellite node and/or the secondary satellite node that are/is in an activated state based on the activation status.

For example, the terminal device may obtain the first dedicated part from the primary satellite node in the activated state, and obtain the second dedicated part from the secondary satellite node in the activated state.

Based on this embodiment, the network side may configure, for the terminal device at a time, activation statuses of primary satellite nodes and secondary satellite nodes and status conversion relationships for the primary satellite nodes and the secondary satellite nodes within a plurality of time periods, to reduce signaling overheads during subsequent handover of the terminal device.

All the solutions in the foregoing embodiments of this application may be combined without a conflict.

The actions of the terminal device in S1001 and S1002 may be performed by the processor 901 in the communication apparatus 900 shown in FIG. 9 by invoking the application program code stored in the memory 904, to indicate the communication apparatus 900 to perform the actions. The actions of the terminal device in S1001 and S1002 may be performed by the processor 901 in the communication apparatus 900 shown in FIG. 9 by invoking the computer program code and/or the instructions stored in the memory 904, so that the communication apparatus 900 performs S1001 and S1002. This is not limited in embodiments of this application.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the terminal device in the foregoing method embodiments, or may be a component that may be used in the terminal device; the communication apparatus may be the control node in the foregoing method embodiments, or may be a component that may be used in the control node; or the communication apparatus may be the satellite node in the foregoing method embodiments, or may be a component that may be used in the satellite node. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that, in embodiments of this application, module division is an example, and is merely logical function division. In actual implementation, another division manner may be used.

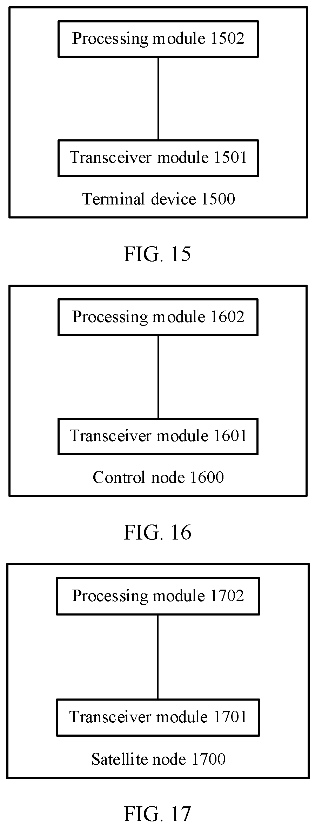

For example, that the communication apparatus is the terminal device in the foregoing method embodiments is used as an example, and FIG. 15 is a diagram of a structure of a terminal device 1500. The terminal device 1500 includes a transceiver module 1501 and a processing module 1502. The transceiver module 1501 may also be referred to as a transceiver unit, and is configured to implement a transceiver function. For example, the transceiver module 1501 may be a transceiver circuit, a transceiver machine, a transceiver, or a communication interface.

The transceiver module 1501 is configured to obtain a common part of RRC signaling based on a location of the terminal device. The common part is applicable to a first zone, and the location of the terminal device is located in the first zone. The transceiver module 1501 is further configured to obtain a dedicated part of the RRC signaling of the terminal device.

The transceiver module 1501 may be configured to implement a transceiver function corresponding to the terminal device in the foregoing method embodiments, and the processing module 1502 may be configured to implement a processing function corresponding to the terminal device in the foregoing method embodiments. Therefore, all related content of each step in the foregoing method embodiments may be cited in function descriptions of a corresponding functional module. Details are not described herein again.

In this embodiment of this application, the terminal device 1500 is presented in a form in which functional modules are obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the terminal device 1500 may be in a form of the communication apparatus 900 shown in FIG. 9.

For example, the processor 901 in the communication apparatus 900 shown in FIG. 9 may invoke computer-executable instructions stored in the memory 904, to cause the communication apparatus 900 to perform the communication method in the foregoing method embodiments.

Specifically, functions/implementation processes of the transceiver module 1501 and the processing module 1502 in FIG. 15 may be implemented by the processor 901 in the communication apparatus 900 shown in FIG. 9 by invoking the computer-executable instructions stored in the memory 904. Alternatively, functions/implementation processes of the processing module 1502 in FIG. 15 may be implemented by the processor 901 in the communication apparatus 900 shown in FIG. 9 by invoking the computer-executable instructions stored in the memory 904, and functions/implementation processes of the transceiver module 1501 in FIG. 15 may be implemented through the communication interface 902 in the communication apparatus 900 shown in FIG. 9.

The terminal device 1500 provided in this embodiment of this application may perform the foregoing communication method. Therefore, for technical effects that can be achieved by the terminal device 1500, refer to the foregoing method embodiments. Details are not described herein again.

Alternatively, for example, an example in which the communication apparatus is the control node in the foregoing method embodiments is used. FIG. 16 is a diagram of a structure of a control node 1600. The control node 1600 includes a transceiver module 1601 and a processing module 1602. The transceiver module 1601 may also be referred to as a transceiver unit, and is configured to implement a transceiver function. For example, the transceiver module 1601 may be a transceiver circuit, a transceiver machine, a transceiver, or a communication interface.

The transceiver module 1601 is configured to: obtain a location of a terminal device, and configure a common part of RRC signaling for the terminal device based on the location of the terminal device.

The transceiver module 1601 may be configured to implement a transceiver function corresponding to the control node in the foregoing method embodiments, and the processing module 1602 may be configured to implement a processing function corresponding to the control node in the foregoing method embodiments. Therefore, all related content of each step in the foregoing method embodiments may be cited in function descriptions of a corresponding functional module. Details are not described herein again.

In this embodiment of this application, the control node 1600 is presented in a form in which functional modules are obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the control node 1600 may be in a form of the communication apparatus 900 shown in FIG. 9.

For example, the processor 901 in the communication apparatus 900 shown in FIG. 9 may invoke computer-executable instructions stored in the memory 904, to cause the communication apparatus 900 to perform the communication method in the foregoing method embodiments.

Specifically, functions/implementation processes of the transceiver module 1601 and the processing module 1602 in FIG. 16 may be implemented by the processor 901 in the communication apparatus 900 shown in FIG. 9 by invoking the computer-executable instructions stored in the memory 904. Alternatively, functions/implementation processes of the processing module 1602 in FIG. 16 may be implemented by the processor 901 in the communication apparatus 900 shown in FIG. 9 by invoking the computer-executable instructions stored in the memory 904, and functions/implementation processes of the transceiver module 1601 in FIG. 16 may be implemented through the communication interface 902 in the communication apparatus 900 shown in FIG. 9.

Because the control node 1600 provided in this embodiment may perform the foregoing communication method, for technical effects that can be achieved by the control node 1600, refer to the foregoing method embodiments. Details are not described herein again.

Alternatively, an example in which the communication apparatus is the satellite node in the foregoing method embodiments is used. FIG. 17 is a diagram of a structure of a satellite node 1700. The satellite node 1700 includes a transceiver module 1701 and a processing module 1702. The transceiver module 1701 may also be referred to as a transceiver unit, and is configured to implement a transceiver function. For example, the transceiver module 1701 may be a transceiver circuit, a transceiver machine, a transceiver, or a communication interface.

The transceiver module 1701 is configured to: obtain requirement information of a terminal device, and configure a dedicated part of RRC signaling of the terminal device for the terminal device based on the requirement information of the terminal device.

The transceiver module 1701 may be configured to implement a transceiver function corresponding to the control node in the foregoing method embodiments, and the processing module 1702 may be configured to implement a processing function corresponding to the control node in the foregoing method embodiments. Therefore, all related content of each step in the foregoing method embodiments may be cited in function descriptions of a corresponding functional module. Details are not described herein again.

In this embodiment of this application, the satellite node 1700 is presented in a form in which functional modules are obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the control node 1600 may be in a form of the communication apparatus 900 shown in FIG. 9.

For example, the processor 901 in the communication apparatus 900 shown in FIG. 9 may invoke computer-executable instructions stored in the memory 904, to cause the communication apparatus 900 to perform the communication method in the foregoing method embodiments.

Specifically, functions/implementation processes of the transceiver module 1701 and the processing module 1702 in FIG. 17 may be implemented by the processor 901 in the communication apparatus 900 shown in FIG. 9 by invoking the computer-executable instructions stored in the memory 904. Alternatively, functions/implementation processes of the processing module 1702 in FIG. 17 may be implemented by the processor 901 in the communication apparatus 900 shown in FIG. 9 by invoking the computer-executable instructions stored in the memory 904, and functions/implementation processes of the transceiver module 1701 in FIG. 17 may be implemented through the communication interface 902 in the communication apparatus 900 shown in FIG. 9.

Because the satellite node 1700 provided in this embodiment may perform the foregoing communication method, for technical effects that can be achieved by the satellite node 1700, refer to the foregoing method embodiments. Details are not described herein again.

It should be understood that, one or more of the foregoing modules or units may be implemented by software, hardware, or a combination thereof. When any one of the foregoing modules or units is implemented by software, the software exists in a form of computer program instructions, and is stored in a memory. A processor may be configured to execute the program instructions and implement the foregoing method procedures. The processor may be built into a SoC (system on chip) or an ASIC, or may be an independent semiconductor chip. In addition to the core configured to perform operations or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, an SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include the memory. When the communication apparatus is a chip system, the communication apparatus may include a chip, or may include the chip and another discrete component. This is not specifically limited in this embodiment of this application.

In a possible implementation, an embodiment of this application further provides a computer-readable storage medium. The computer-readable storage medium stores a computer program or instructions. When the computer program or instructions are run on a communication apparatus, the communication apparatus is caused to perform the method in any one of the foregoing method embodiments or the implementations of the foregoing method embodiments.

In a possible implementation, an embodiment of this application further provides a communication system. The communication system includes the terminal device in the foregoing method embodiments, and the control node and the satellite node in the foregoing method embodiments.

In a possible implementation, an embodiment of this application further provides a communication method. The communication method includes the method in any one of the foregoing method embodiments or the implementations of the foregoing method embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, applied to a terminal device, wherein the method comprises:
obtaining a common part of radio resource control RRC signaling based on a location of the terminal device, wherein the common part is applicable to a first zone, and the location of the terminal device is located in the first zone; and
obtaining a dedicated part of the RRC signaling of the terminal device.

2. A communication method, applied to a control node, wherein the method comprises:
obtaining a location of a terminal device; and
configuring a common part of RRC signaling for the terminal device based on the location of the terminal device, wherein the common part is applicable to a first zone, and the location of the terminal device is located in the first zone.

3. A communication method, applied to a satellite node, wherein the method comprises:
obtaining requirement information of a terminal device; and
configuring a dedicated part of RRC signaling of the terminal device for the terminal device based on the requirement information of the terminal device.

4. The method according to any one of claims 1 to 3, wherein the common part of the RRC signaling is shared by a terminal device in the first zone, and the dedicated part of the RRC signaling is dedicated to the terminal device.

5. The method according to claim 4, wherein the common part comprises at least one of the following: a common synchronization signal block-based measurement timing configuration SMTC configuration, a common bandwidth part BWP configuration, and a common random access channel RACH configuration.

6. The method according to claim 4, wherein the dedicated part comprises at least one of the following: a dedicated SMTC configuration, a dedicated BWP configuration, and a dedicated RACH configuration.

7. The method according to any one of claims 1 and 4 to 6, wherein the terminal device is in a multi-connection state, the multi-connection state means that the terminal device is separately connected to the control node and the satellite node, the control node is communicatively connected to the satellite node, and obtaining the common part of the RRC signaling based on the location of the terminal device comprises:
obtaining, based on the location of the terminal device, the common part from the control node whose service zone comprises the first zone.

8. The method according to claim 7, wherein the obtaining the dedicated part of the RRC signaling of the terminal device comprises:
obtaining the dedicated part from the satellite node based on time information, wherein a beam service zone of the satellite node comprises the first zone.

9. The method according to claim 7, wherein the satellite node comprises a primary satellite node and a secondary satellite node; and the dedicated part comprises a first dedicated part and a second dedicated part, the first dedicated part is related to the primary satellite node, and the second dedicated part is related to the secondary satellite node.

10. The method according to claim 9, wherein the obtaining the dedicated part of the RRC signaling of the terminal device comprises:
obtaining an interface type for message transmission between the control node and the satellite node; and
obtaining the dedicated part based on the interface type for message transmission between the control node and the satellite node.

11. The method according to claim 10, wherein
when a message is transmitted between the primary satellite node and the secondary satellite node through Xn-C, the first dedicated part and the second dedicated part are obtained by the terminal device from the primary satellite node; or
when a message is transmitted between the control node and the satellite node through Hs-C, the first dedicated part is obtained by the terminal device from the primary satellite node, and the second dedicated part is obtained from the primary satellite node or the control node.

12. The method according to claim 9, wherein the obtaining the dedicated part of the RRC signaling of the terminal device comprises:
obtaining a signaling configuration status between the terminal device and the secondary satellite node; and
obtaining the second dedicated part based on the signaling configuration status between the terminal device and the secondary satellite node.

13. The method according to claim 12, wherein
when transmission signaling is configured between the terminal device and the secondary satellite node, the second dedicated part is obtained by the terminal device from the secondary satellite node; or
when no transmission signaling is configured between the terminal device and the secondary satellite node, the second dedicated part is obtained by the terminal device from the primary satellite node or the control node.

14. The method according to any one of claims 1 and 4 to 13, wherein a timer is configured for the terminal device, and the method further comprises:
when the timer expires, sending a retransmission request, wherein the retransmission request is used to request to retransmit unreceived data.

15. The method according to claim 14, wherein the timer is configured by the satellite node.

16. The method according to claim 14, wherein the data is data that is from a source satellite node and that is received by a destination satellite node, the timer is configured by the source satellite node or the destination satellite node, the source satellite node is a satellite node currently accessed by the terminal device, and the destination satellite node is a satellite node to which the terminal device needs to be handed over.

17. The method according to any one of claims 14 to 16, wherein the method further comprises:
when the timer expires, sending indication information, wherein the indication information indicates whether the data is received.

18. The method according to any one of claims 1 and 4 to 17, wherein the method further comprises:
reporting location-related information of primary satellite nodes and secondary satellite nodes that are accessed by the terminal device within different time periods.

19. The method according to any one of claims 1 to 18, wherein status information of satellite nodes is configured for the terminal device, and the status information comprises activation statuses of primary satellite nodes and secondary satellite nodes of the satellite nodes and status conversion relationships for the primary satellite nodes and the secondary satellite nodes of the satellite nodes within different time periods.

20. A communication apparatus, comprising a module configured to perform the method according to any one of claims 1 and 4 to 19.

21. A communication apparatus, comprising a module configured to perform the method according to any one of claims 2 and 4 to 6.

22. A communication apparatus, comprising a module configured to perform the method according to any one of claims 3 to 6 and 10 to 13.

23. A communication apparatus, wherein the communication apparatus comprises one or more processors and one or more memories, the one or more memories are coupled to the one or more processors, and the one or more memories are configured to store computer program code or computer instructions; and
when the one or more processors execute the computer instructions, the communication apparatus is caused to perform the method according to any one of claims 1 and 4 to 19, perform the method according to any one of claims 2 and 4 to 6, or perform the method according to any one of claims 3 to 6 and 10 to 13.

24. A computer-readable storage medium, wherein the computer-readable storage medium stores computer instructions or a program; and when the computer instructions or the program is run on a computer, the computer is caused to perform the method according to any one of claims 1 to 19.
